# EUROPEAN PATENT APPLICATION

(11) **EP 3 720 136 A1**
(43) Date of publication of application: **07.10.2020**
(21) Application number: 18882652.3
(22) Date of filing: 16.11.2018
(51) Int. Cl.: H04N 21/238, H04N 21/438

(54) **TRANSMISSION DEVICE, TRANSMISSION METHOD, RECEPTION DEVICE, AND RECEPTION METHOD**

(30) Priority: 30.11.2017 JP 2017231266
(71) Applicant: Sony Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2018/042386
(87) International publication number: WO 2019/107175

(57) **Abstract**

Improvement of the display performance in VR reproduction is achieved.

Encoded streams corresponding to respective divided regions (partitions) of a wide viewing angle image are transmitted together with information of the number of pixels and a frame rate of each divided region. On the reception side, the number of divided regions to be decoded corresponding to a display region can be easily set to a decodable maximum on the basis of the decoding capacity and the information of the number of pixels and the frame rate of each divided region of the wide viewing angle image. Therefore, the frequency of switching of the encoded stream with a movement of the display region can be reduced as far as possible, and improvement of the display performance in VR reproduction can be made.

## Description

### [Technical Field]

The present technology relates to a transmission apparatus, a transmission method, a reception apparatus, and a reception method, and particularly to a transmission apparatus and so forth for transmitting a wide viewing angle image.

### [Background Art]

Recently, delivery of VR (Virtual Reality) contents is considered. For example, PTL 1 describes that, on the transmission side, a spherical captured image is plane packed to obtain a projection picture as a wide viewing angle image, and encoded image data of the projection picture is transmitted to the reception side such that VR reproduction is performed on the reception side.

### [Citation List]

### [Patent Literature]

[PTL 1]
Japanese Patent Laid-Open No. 2016-194784

### [Summary]

### [Technical Problem]

The feature of VR reproduction resides in implementation of viewer interactive display. If image data of a projection picture is transmitted by one encoded stream, then the decoding load on the reception side is high. It is conceivable to divide a projection picture and transmit encoded streams corresponding to the individual divided regions. On the reception side, it is only necessary to decode an encoded stream of part of the divided regions corresponding to a display region, and increase of the decoding load can be prevented.

In this case, switching of an encoded stream to be decoded becomes necessary together with movement of the display region. However, upon switching of an encoded stream, there is the possibility that deterioration of the display performance may be caused by disagreement between a motion of the user and the display. Therefore, it is demanded to minimize the frequency of switching of an encoded stream with a movement of a display region.

The object of the present technology resides in achievement of improvement of the display performance in VR reproduction.

### [Solution to Problem]

A concept of the present technology resides in a transmission apparatus including a transmission section configured to transmit an encoded stream corresponding to each of divided regions of a wide viewing angle image and transmit information of the number of pixels and a frame rate of each of the divided regions.

In the present technology, encoded streams corresponding to each of the divided regions (each of the partitions) of the wide viewing angle image are transmitted, and the information of the number of pixels and the frame rate of each of the divided regions is transmitted by the transmission section. For example, the wide viewing angle image may include a projection picture obtained by cutting out and plane packing part or the entirety of a spherical captured image.

For example, the encoded stream corresponding to each of the divided regions of the wide viewing angle image may be hierarchically encoded. In this case, on the reception side, temporal partial decode can be performed readily. Further, for example, the transmission section may transmit the information of the number of pixels and the frame rate of the divided region together with a container that includes the encoded stream. In this case, the information of the number of pixels and the frame rate of the divided region can be acquired without decoding the encoded streams.

For example, the encoded stream corresponding to each divided region of the wide viewing angle image may be obtained by individually encoding the divided region of the wide viewing angle image. Further, for example, the encoded stream corresponding to each divided region of the image may be obtained by performing encoding using a tile function for converting each divided region of the wide viewing angle image into a tile. In this case, each of the encoded streams of the divided regions can be decoded independently.

For example, the transmission section may transmit encoded streams corresponding to all of the respective divided regions of the wide viewing angle image. Alternatively, the transmission section may transmit an encoded stream corresponding to a requested divided region from among the respective divided regions of the wide viewing angle image.

In this manner, in the present technology, the information of the number of pixels and the frame rate of each of divided regions of the wide viewing angle image is transmitted. Therefore, on the reception side, the number of divided regions to be decoded corresponding to the display region can be easily set to a decodable maximum on the basis of the decoding capacity and the information of the number of pixels and the frame rate of the divided regions of the wide viewing angle image. Consequently, the frequency of switching of the encoded stream with a movement of the display region can be reduced as far as possible and improvement of the display performance in VR reproduction can be achieved.

Further, another concept of the present technology resides in a reception apparatus including a control section configured to control a process for decoding encoded streams of a predetermined number of divided regions corresponding to a display region from among respective divided regions of a wide viewing angle image to obtain image data of the display region, and a process for calculating a value of the predetermined number on the basis of a decoding capacity and information of the number of pixels and a frame rate associated with each of the encoded streams corresponding to the respective divided regions of the wide viewing angle image.

In the present technology, the process for decoding encoded streams of a predetermined number of the divided regions corresponding to the display region from among the respective divided regions of the wide viewing angle image to obtain the image data of the display region is controlled by the control section. Further, the process for calculating the value of the predetermined number on the basis of the decoding capacity and the information of the number of pixels and the frame rate associated with each of the encoded streams corresponding to the respective divided regions of the wide viewing angle image is controlled by the control section. For example, the control section may further control a process for requesting a distribution server for transmission of the encoded streams of the predetermined number of divided regions and receiving the encoded streams of the predetermined number of divided regions from the distribution server.

In this manner, in the present technology, the number of divided regions to be decoded corresponding to the display region is calculated on the basis of the decoding capacity and the information of the number of pixels and the frame rate of the divided region. Therefore, the number of divided regions to be decoded corresponding to the display region can be set easily to a maximum, and the frequency of switching of the encoded stream with a movement of the display region can be reduced as far as possible, so that improvement of the display performance in VR reproduction can be made.

It is to be noted that, in the present technology, for example, the control section may further control a process for predicting that the display region exceeds a decode range and switching the decode range. This makes it possible to perform display suitable for a destination of movement even in the case where the display region moves. Further, in this case, for example, the control section may predict that the display region exceeds the decode range and switches a decode method to temporal partial decode to enlarge the decode range, and may further control a process for predicting that the display region converges into the decode range before the enlargement and switching the decode method to temporal full decode to reduce the decode range. In this case, by switching the decode method to temporal partial decode, decode becomes possible even if the decode range is expanded. Further, by expanding the decode range, the frequency of switching of the encoded stream with respect to movement of the display region different from the prediction, namely, of the decode range, can be reduced, and further improvement of the display performance in VR reproduction can be made.

### [Advantageous Effects of Invention]

With the present technology, improvement of the display performance in VR reproduction can be achieved. It is to be noted that the effect described here is not necessarily limited and may be any of advantageous effects described in the present disclosure.

### [Brief Description of Drawings]

[FIG. 1]

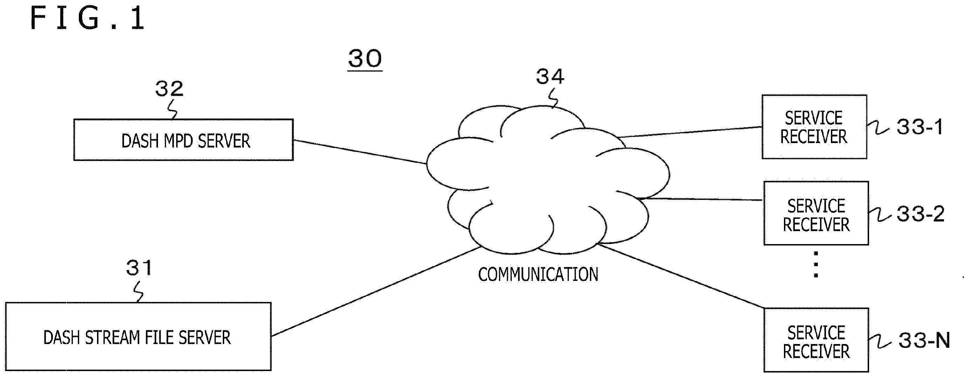

   FIG. 1 is a block diagram depicting an example of a configuration of an MPEG-DASH-based stream delivery system.
[FIG. 2]

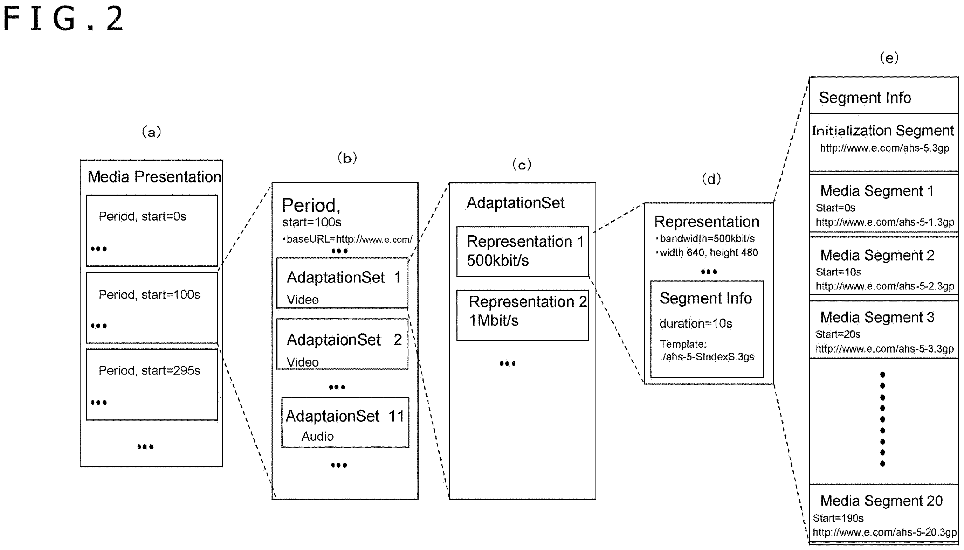

   FIG. 2 is a view depicting an example of a relationship of respective structures arranged hierarchically in an MPD file.
[FIG. 3]

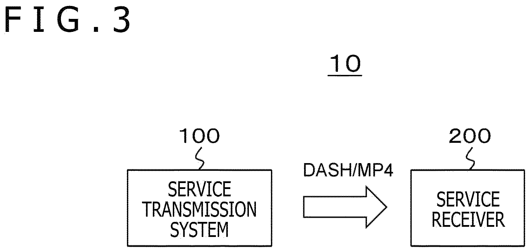

   FIG. 3 is a block diagram depicting an example of a configuration of a transmission and reception system as an embodiment.
[FIG. 4]

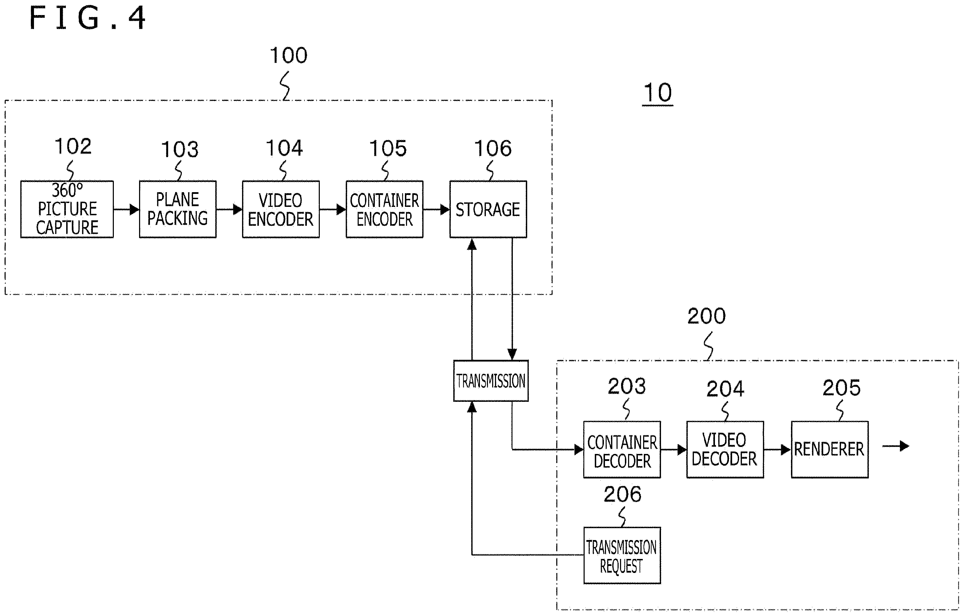

   FIG. 4 is a view schematically depicting an example of a configuration of the entire transmission and reception system.
[FIG. 5]

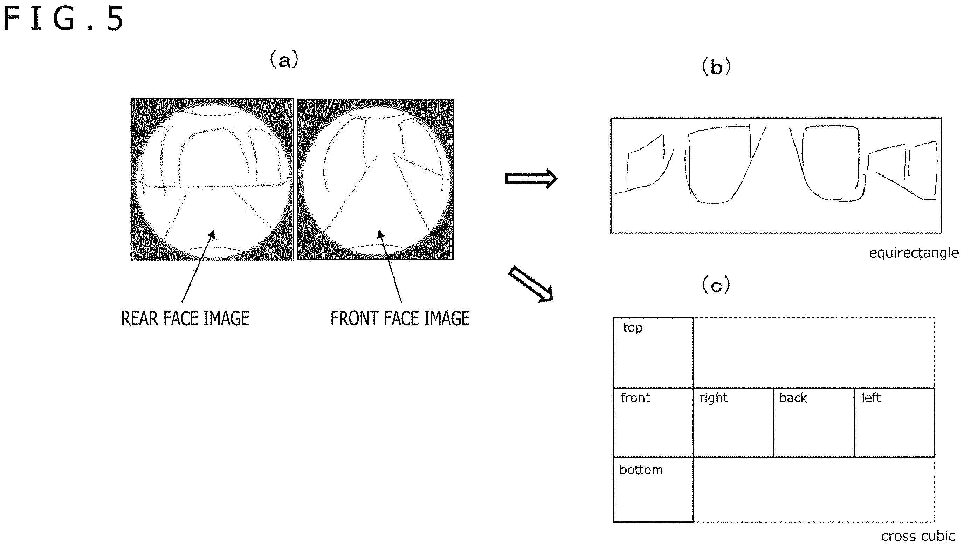

   FIG. 5 is a view illustrating plane packing for obtaining a projection picture from a spherical captured image.
[FIG. 6]

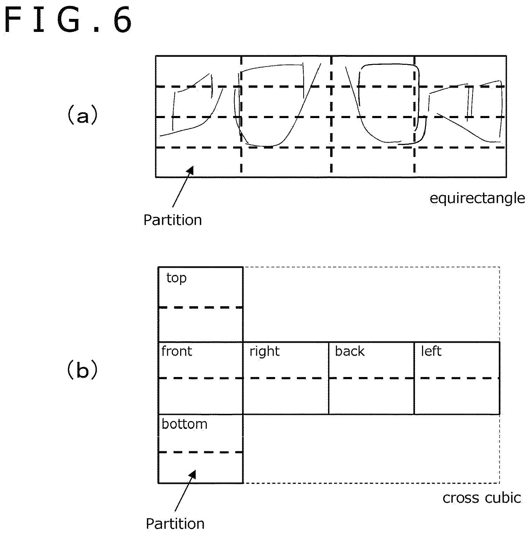

   FIG. 6 is a view depicting an example of division of a projection picture.
[FIG. 7]

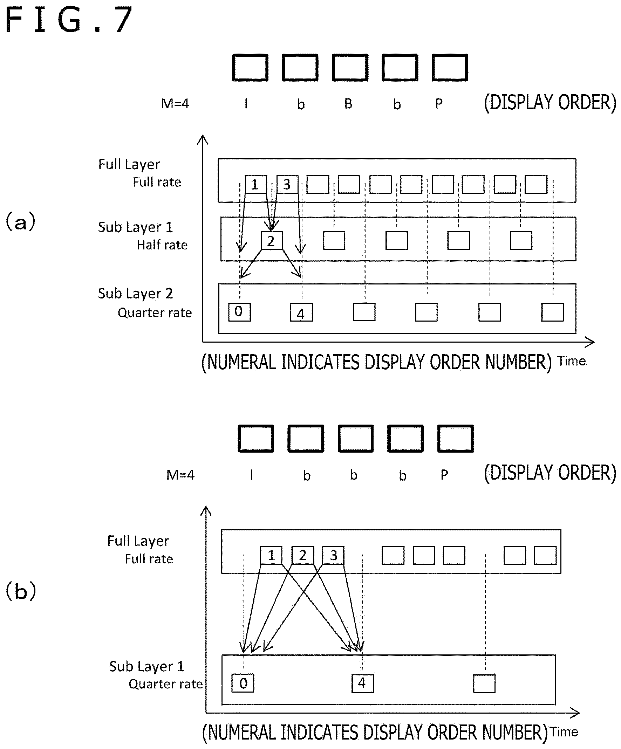

   FIG. 7 is a view illustrating hierarchical encoding.
[FIG. 8]

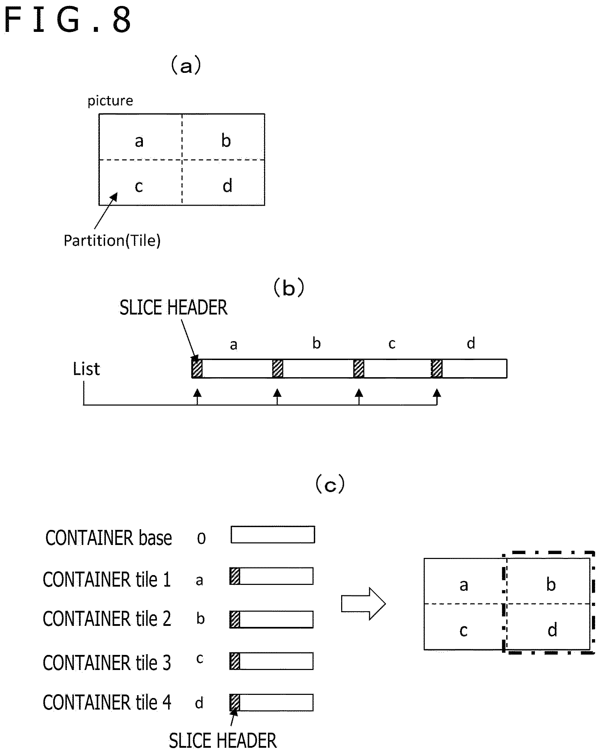

   FIG. 8 is a view illustrating encoding using a tile function for converting each partition into a tile.
[FIG. 9]

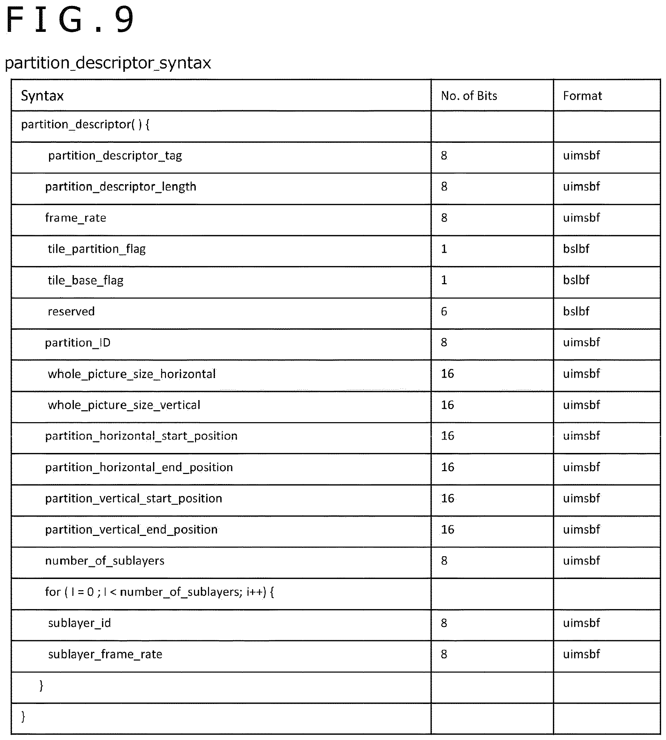

   FIG. 9 is a view depicting an example of a structure of a partition descriptor.
[FIG. 10]

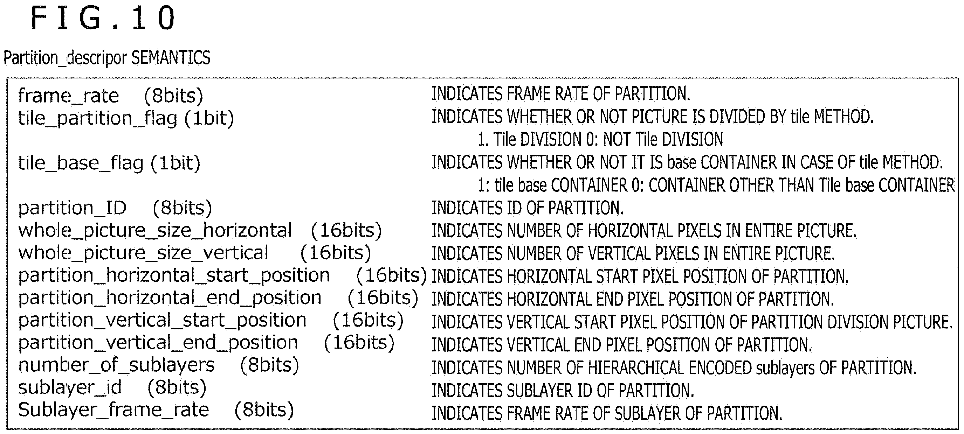

   FIG. 10 is a view depicting the content of principal information in the structure example of the partition descriptor.
[FIG. 11]

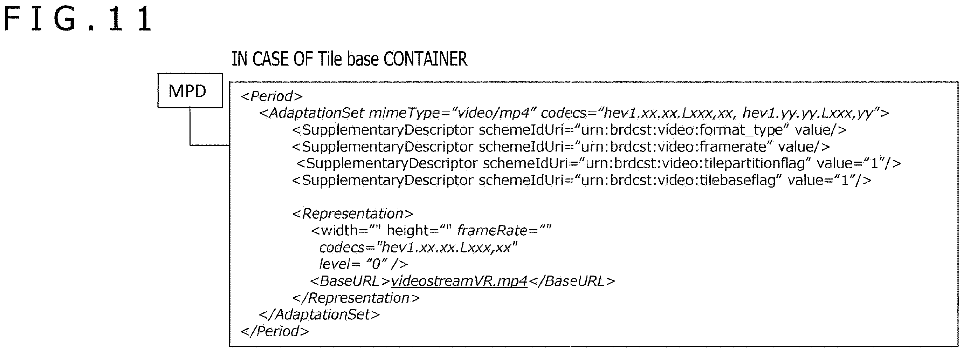

   FIG. 11 is a view depicting an example of a description of an MPD file corresponding to a tile-based MP4 stream (tile-based container).
[FIG. 12]

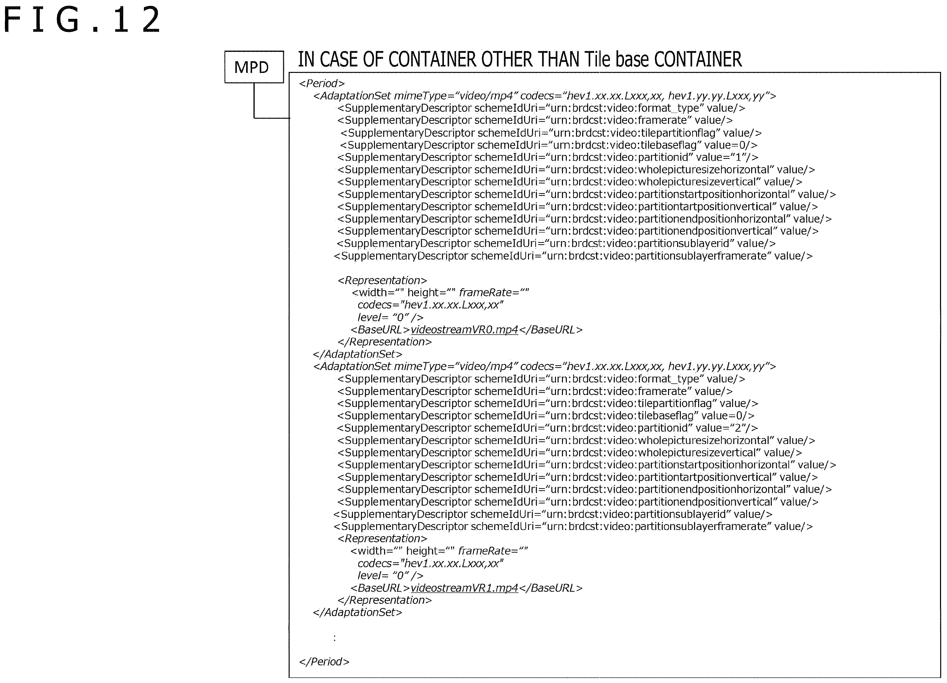

   FIG. 12 is a view depicting an example of description of an MPD file corresponding to an MP4 stream of each partition.
[FIG. 13]

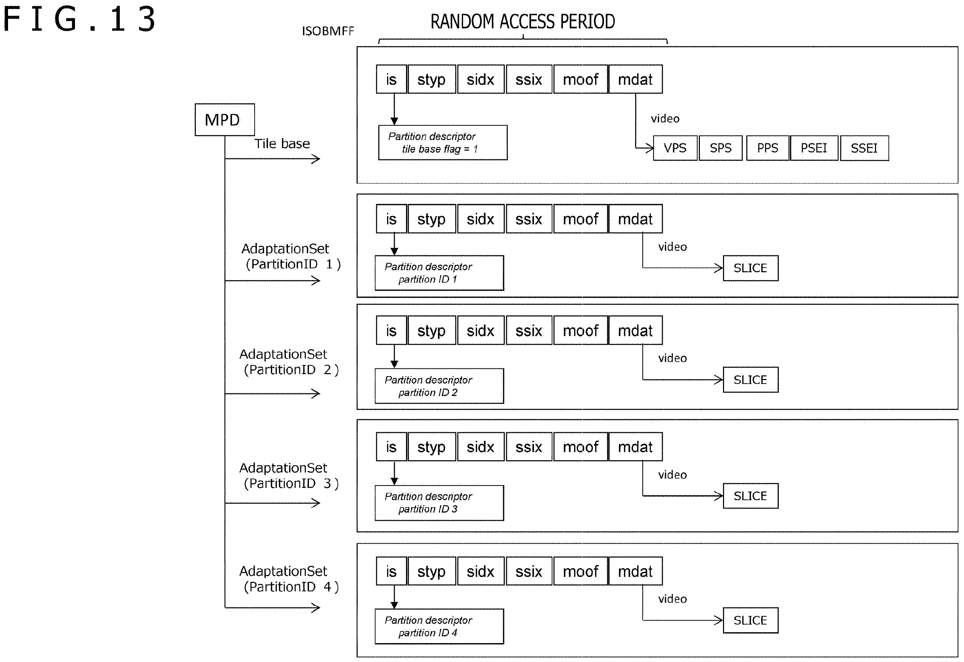

   FIG. 13 is a view schematically depicting an example of an MP4 stream (track) in the case where encoding using a tile function for converting each partition into a tile is performed.
[FIG. 14]

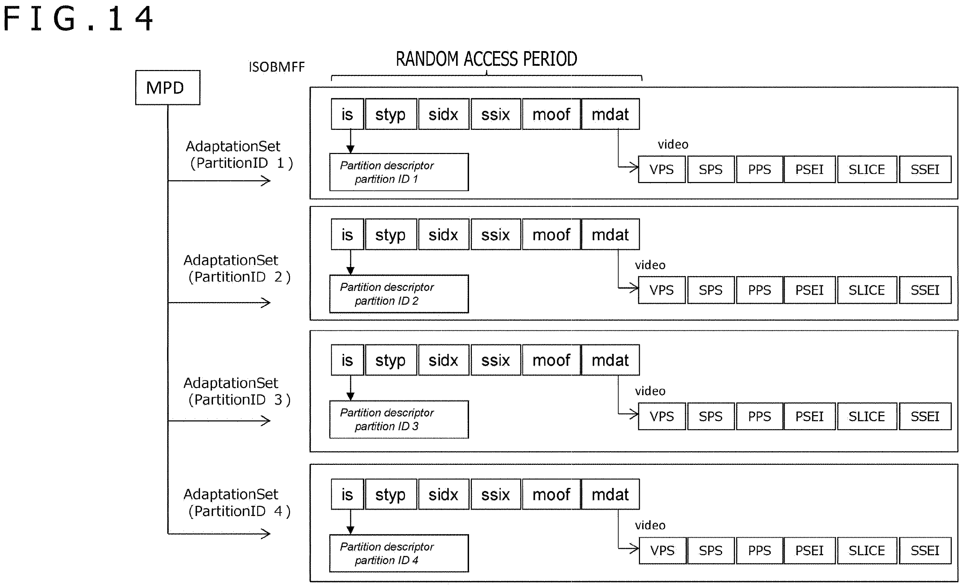

   FIG. 14 is a view schematically depicting an example of an MP4 stream (track) in the case where each partition is encoded individually.
[FIG. 15]

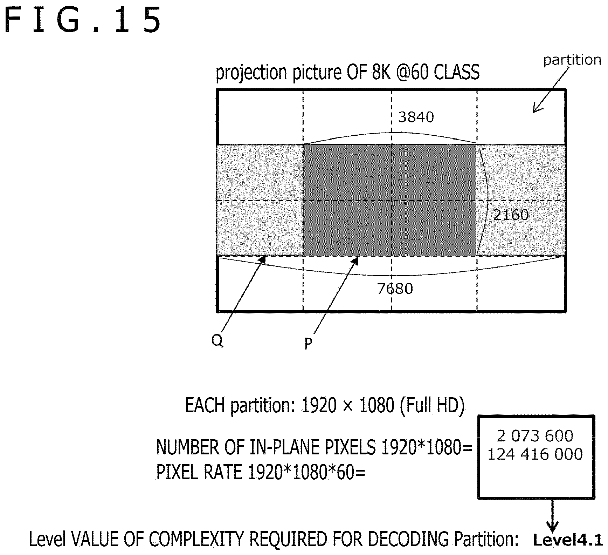

   FIG. 15 is a view depicting an example in which a projection picture of the 8 K/60 Hz class is divided by a partition size of 1920 × 1080 (Full HD).
[FIG. 16]

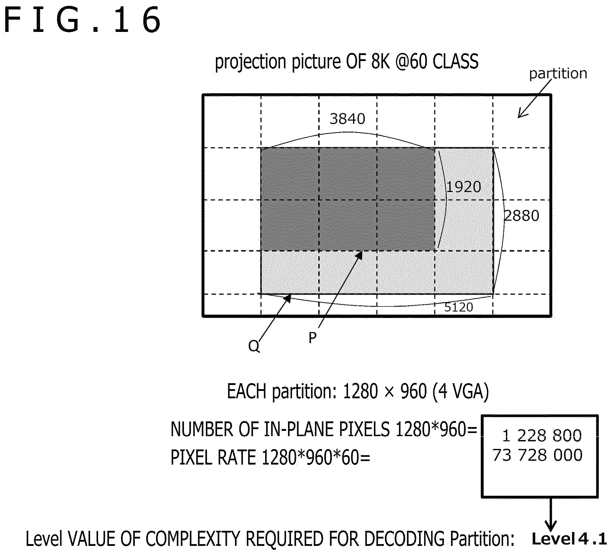

   FIG. 16 is a view depicting an example in which a projection picture of the 8 K/60 Hz class is divided by a partition size of 1280 × 960 (4 VGA).
[FIG. 17]

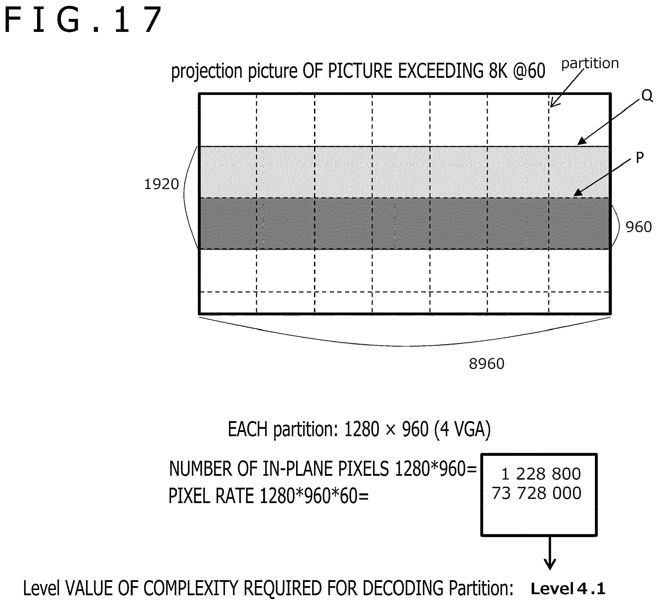

   FIG. 17 is a view depicting an example in which a projection picture exceeding 8 K/60 Hz is divided by a partition size of 1280 × 960 (4 VGA).
[FIG. 18]

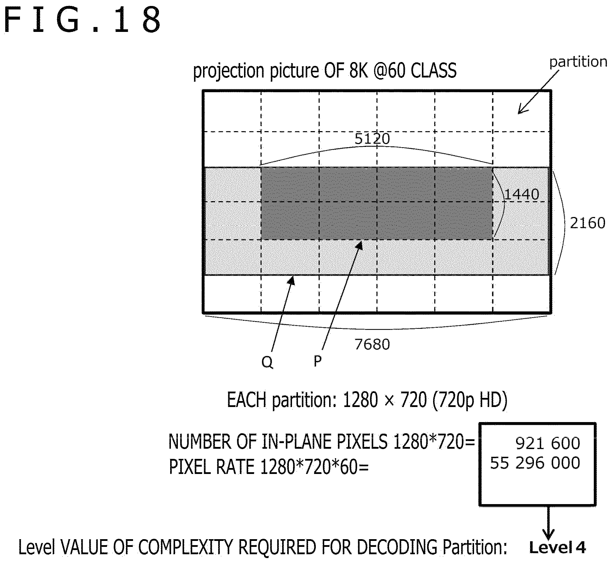

   FIG. 18 is a view depicting an example in which a projection picture of the 8 K/60 Hz class id divided by a partition size of 1280 × 720 (720p HD).
[FIG. 19]

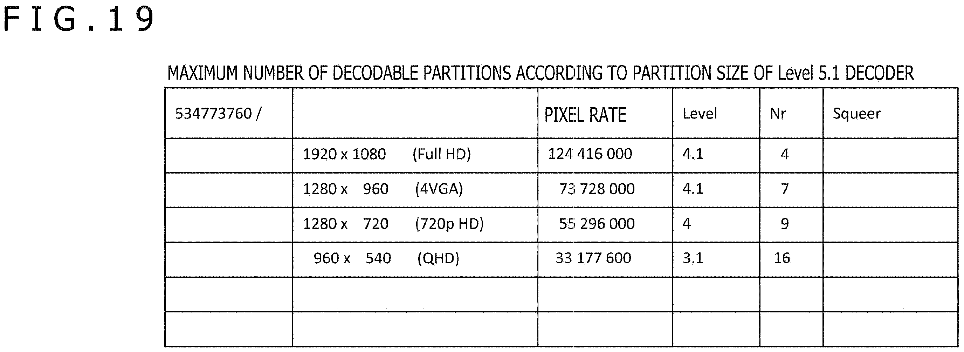

   FIG. 19 is a view collectively depicting the maximum number of decodable partitions according to partition sizes in a "Level 5.1" decoder.
[FIG. 20]

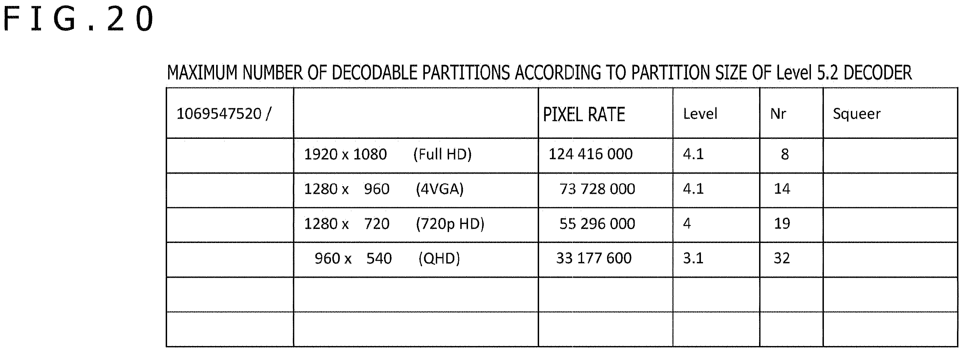

   FIG. 20 is a view collectively depicting the maximum number of decodable partitions according to partition sizes in a "Level 5.2" decoder.
[FIG. 21]

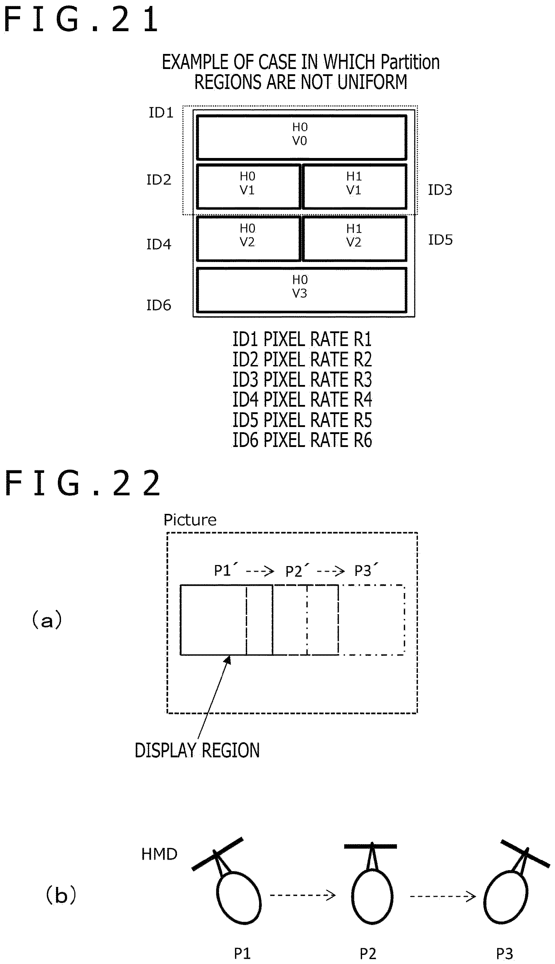

   FIG. 21 is a view depicting a case in which the number of pixels of each partition is not uniform.
[FIG. 22]
   FIG. 22 is a view depicting an example of movement control of a display region in the case where an HMD is used as a display apparatus.
[FIG. 23]

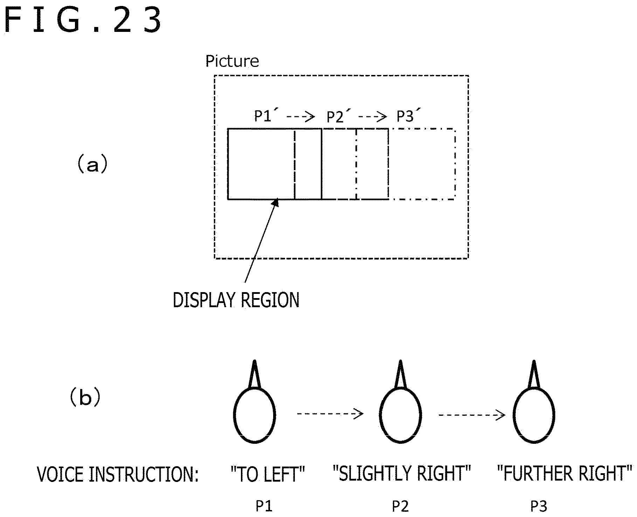

   FIG. 23 is a view depicting an example of movement control of a display region in the case where a display panel is used as a display apparatus.
[FIG. 24]

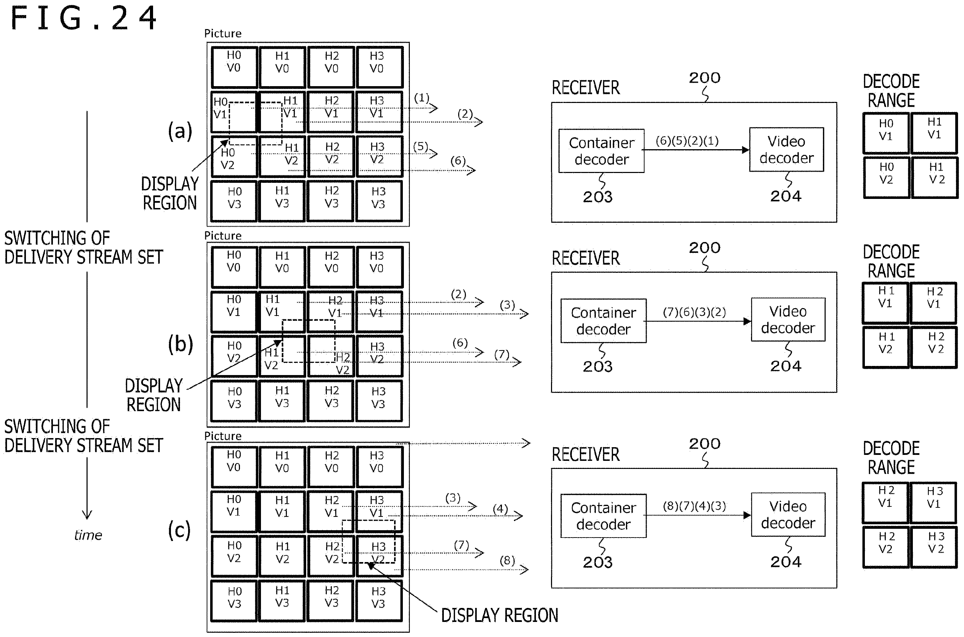

   FIG. 24 is a view depicting an example of switching of a delivery stream set with a movement of a display region.
[FIG. 25]

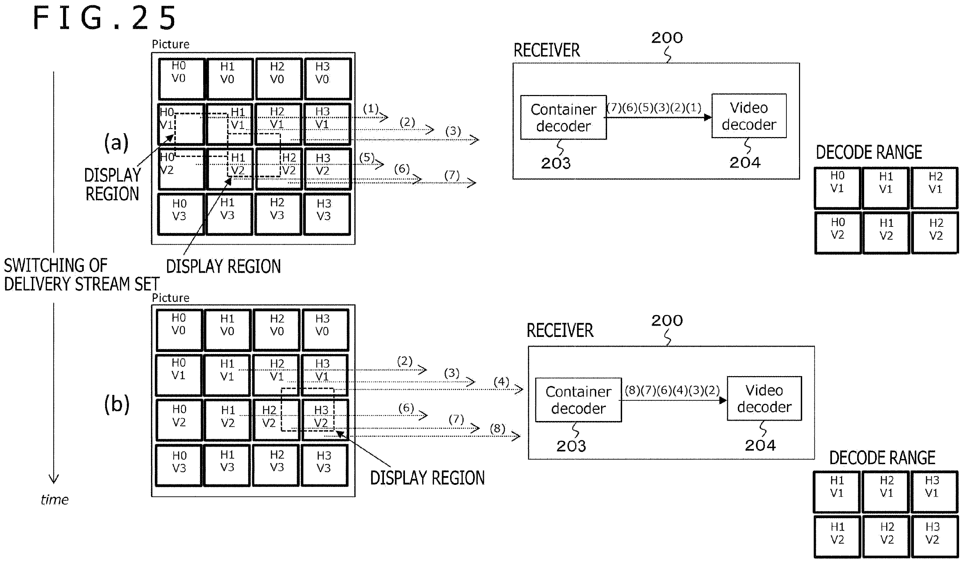

   FIG. 25 is a view depicting an example of switching of a delivery stream set with a movement of a display region.
[FIG. 26]

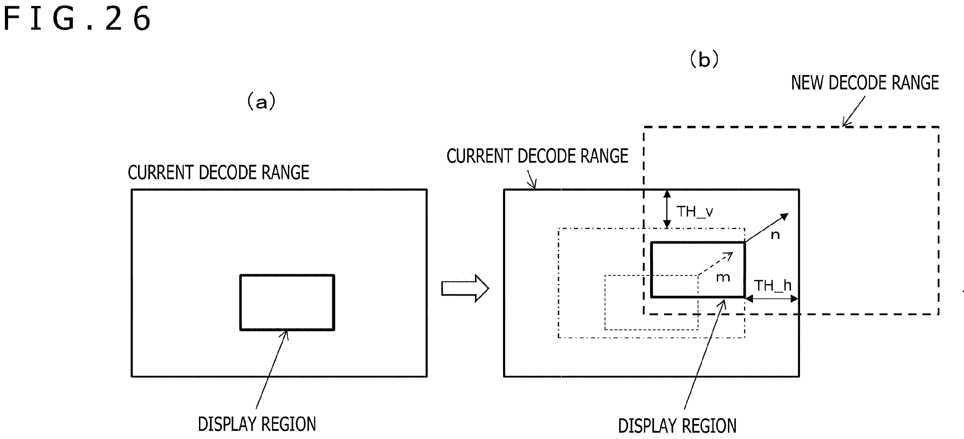

   FIG. 26 is a view illustrating a case in which it is predicted that a display region exceeds a decode range.
[FIG. 27]

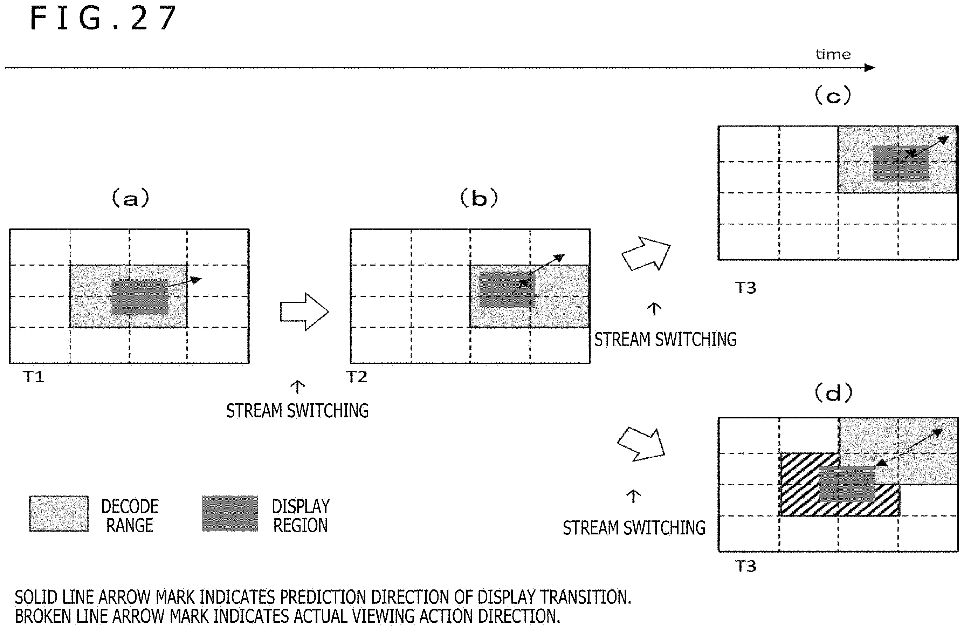

   FIG. 27 is a view depicting a state of switching of a decode range in the case where a display region successively moves.
[FIG. 28]

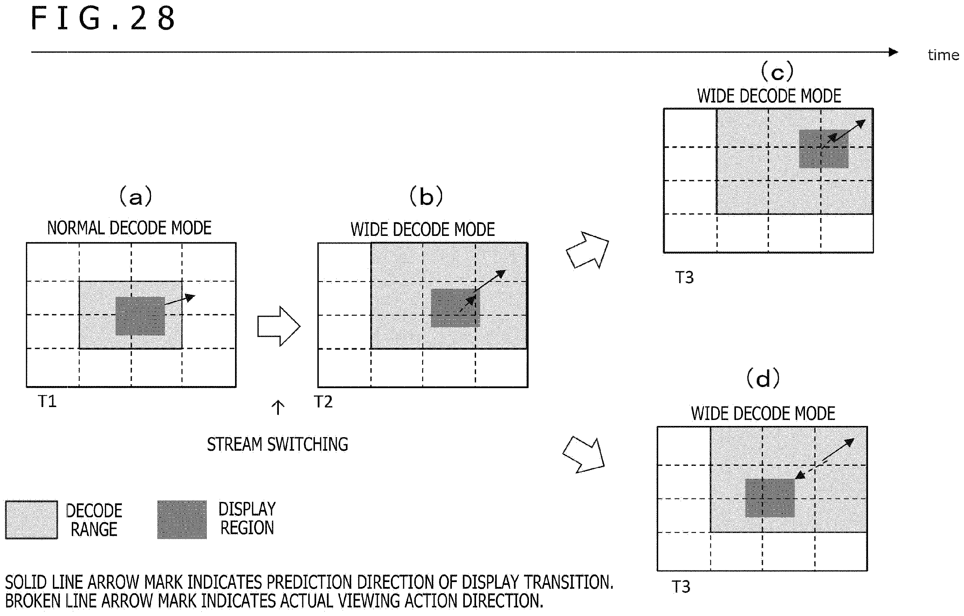

   FIG. 28 is a view depicting a state of switching of a decode range in the case where a display region successively moves (wide decode mode introduction).
[FIG. 29]

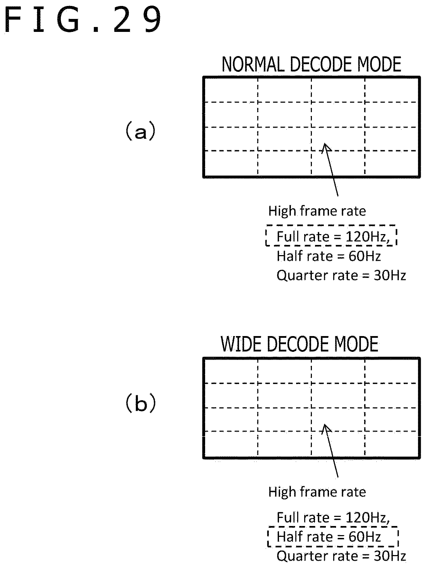

   FIG. 29 is a view depicting a frame rate of each partition in the case where video encoding is ready for a tile.
[FIG. 30]

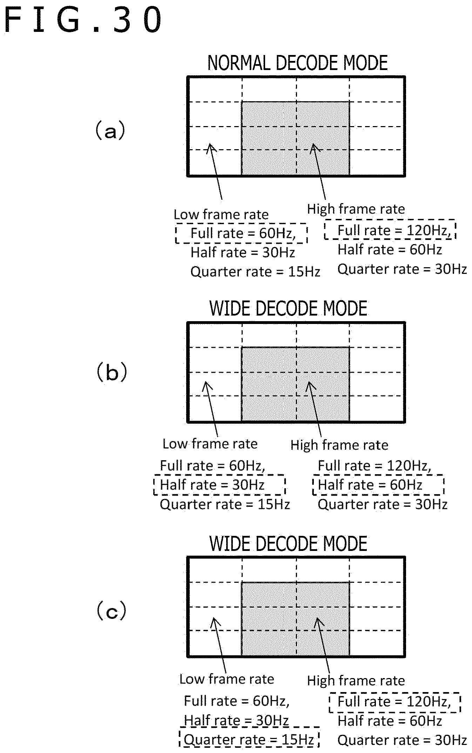

   FIG. 30 is a view depicting a frame rate of a partition in the case where video encoding encodes each partition into an independent stream.
[FIG. 31]

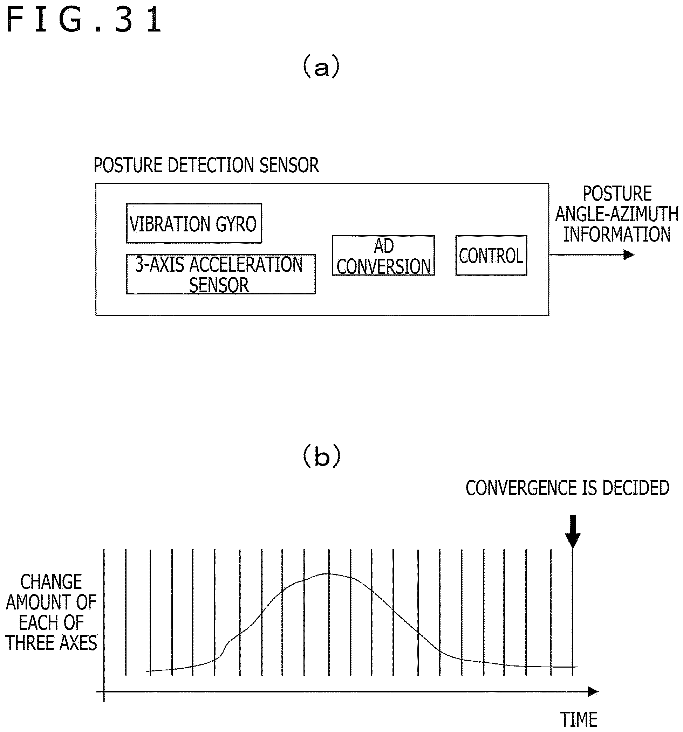

   FIG. 31 is a view illustrating convergence prediction of a display region.
[FIG. 32]

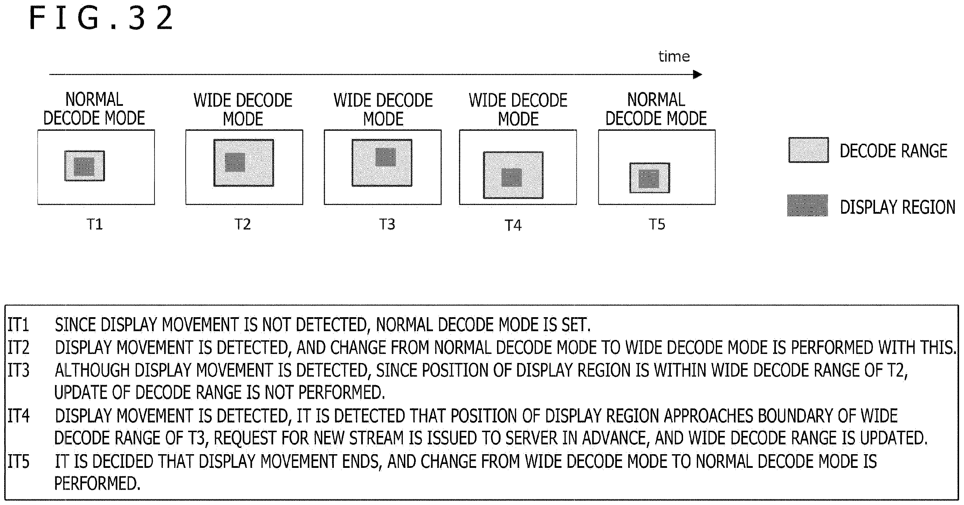

   FIG. 32 is a view depicting an example of mode change control.
[FIG. 33]

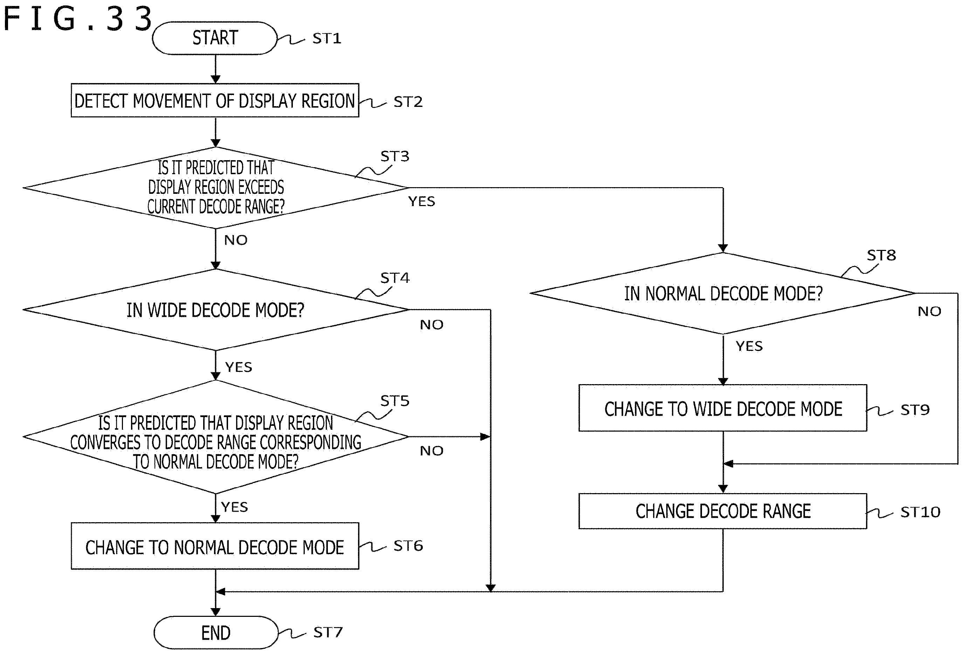

   FIG. 33 is a flow chart depicting an example of a control process for decode range change and mode change by a control section of a service receiver.
[FIG. 34]

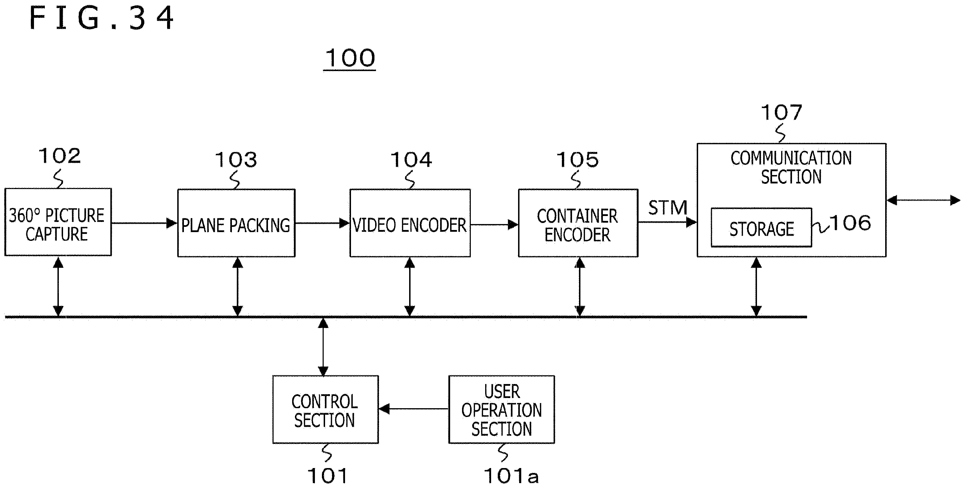

   FIG. 34 is a block diagram depicting an example of a configuration of a service transmission system.
[FIG. 35]

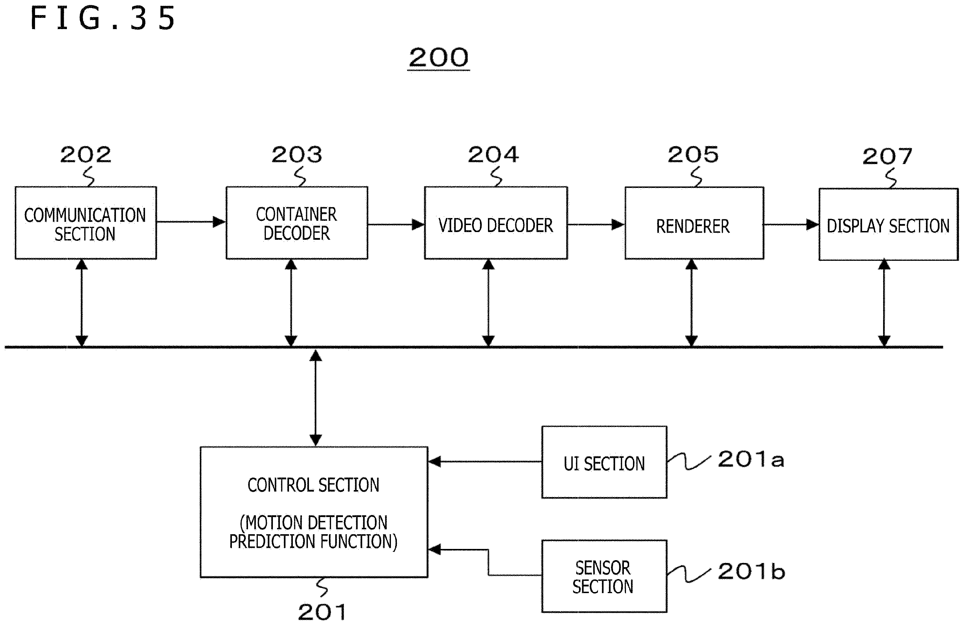

   FIG. 35 is a block diagram depicting an example of a configuration of the service receiver.
[FIG. 36]

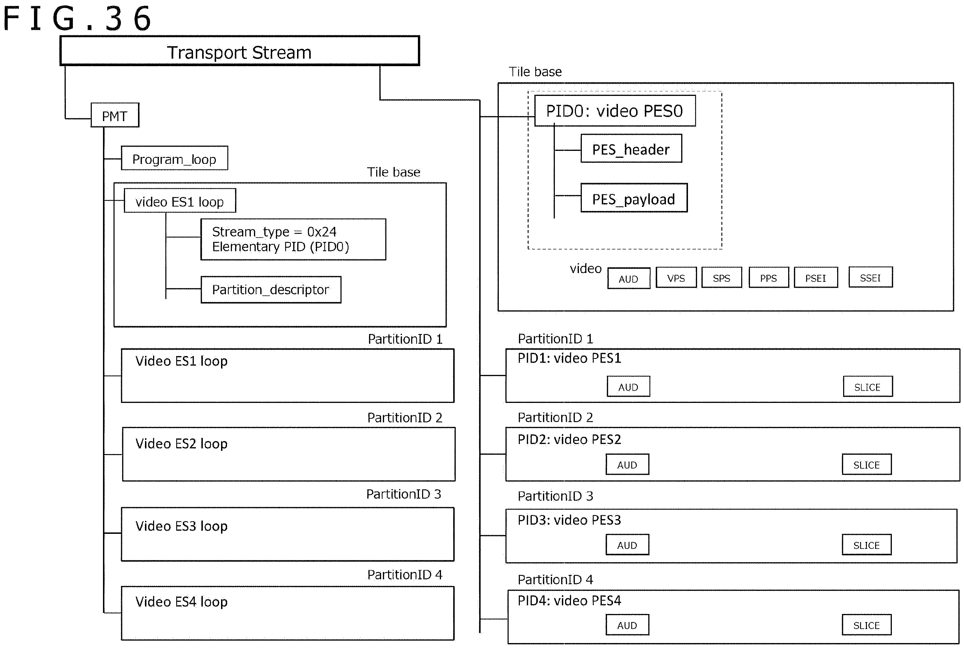

   FIG. 36 is a view depicting an example of a configuration of a transport stream in the case where video encoding is ready for a tile.
[FIG. 37]

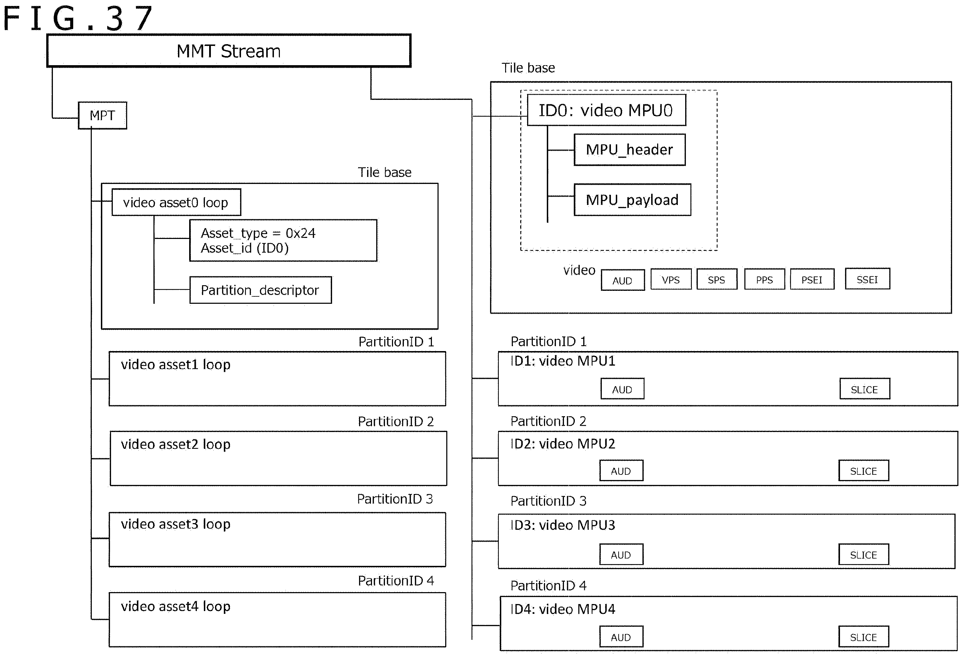

   FIG. 37 is a view depicting an example of a configuration of an MMT stream in the case where video encoding is ready for a tile.
[FIG. 38]

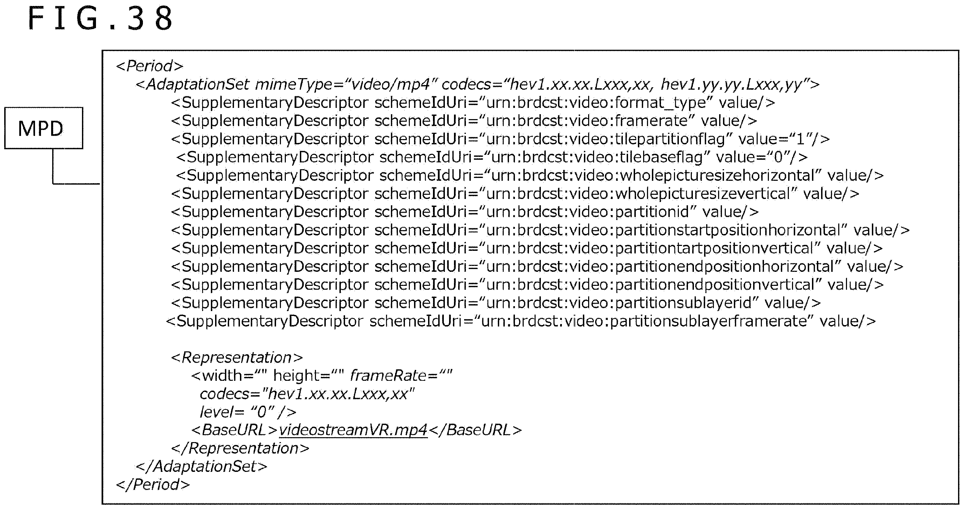

   FIG. 38 is a view depicting an example of a description of an MPD file in the case where a tile stream has a single stream configuration.
[FIG. 39]

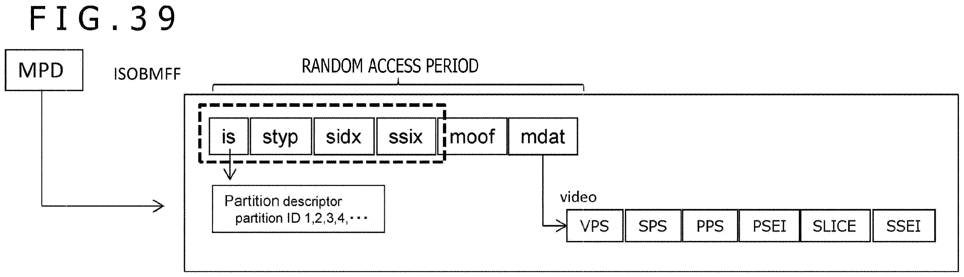

   FIG. 39 is a view schematically depicting an example of an MP4 stream (track) in the case where a tile stream has a single stream configuration.
[FIG. 40]

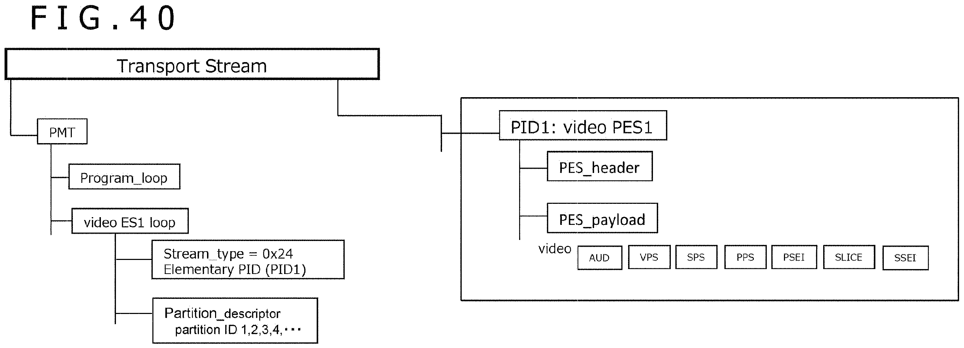

   FIG. 40 is a view depicting an example of a configuration of a transport stream in the case where a tile stream has a single stream configuration.
[FIG. 41]

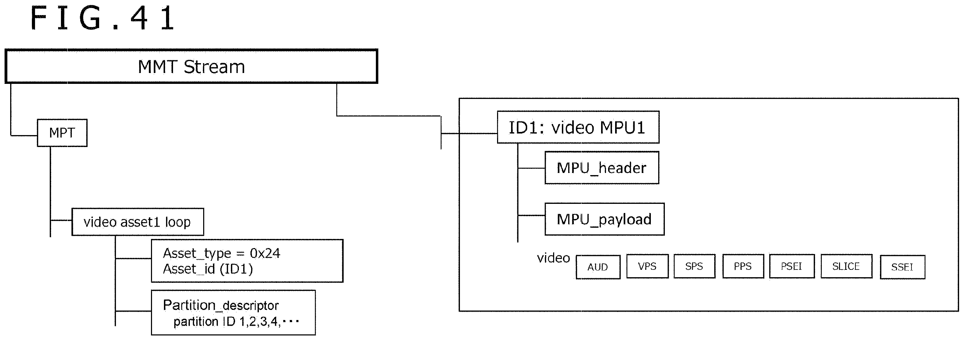

   FIG. 41 is a view depicting an example of a configuration of an MMT stream in the case where a tile stream has a single stream configuration.
[FIG. 42]

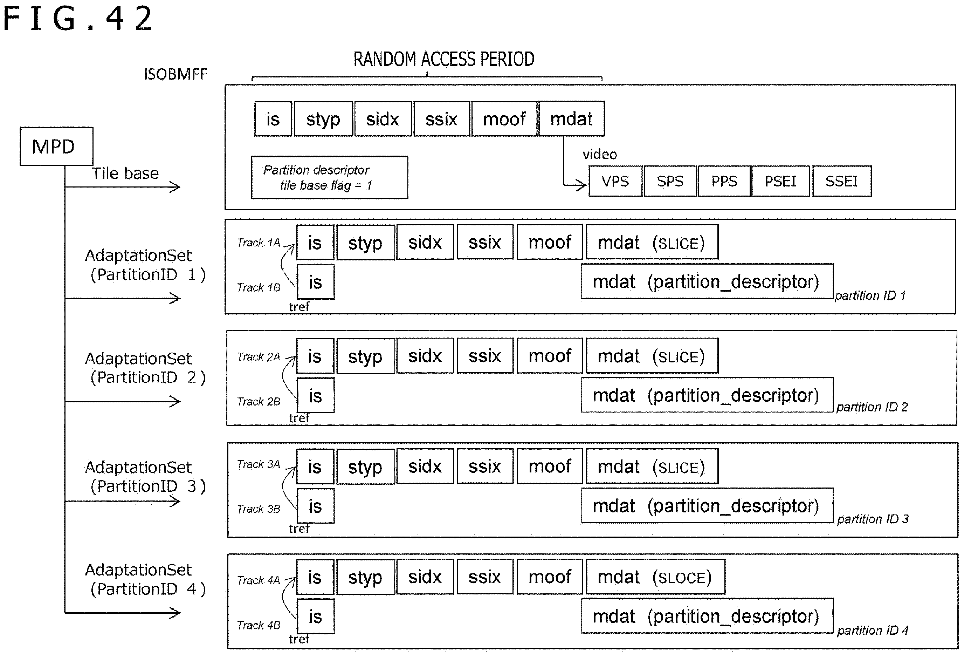

   FIG. 42 is a view schematically depicting another example of an MP4 stream (track) in the case where encoding is performed using a tile function for converting each partition into a tile.
[FIG. 43]

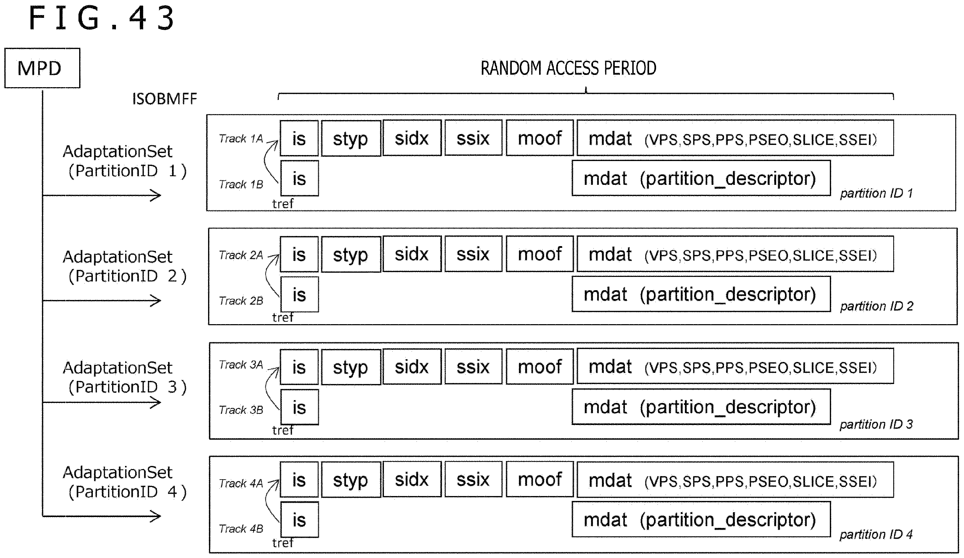

   FIG. 43 is a view schematically depicting a further example of an MP4 stream (track) in the case where each partition is encoded individually.
[FIG. 44]

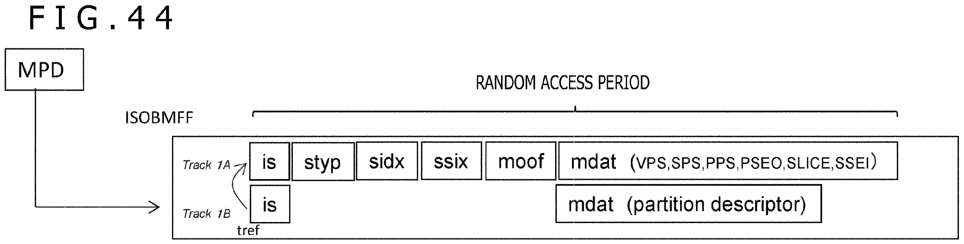

   FIG. 44 is a view schematically depicting an example of an MP4 stream (track) in the case where a tile stream has a single stream configuration.

### [Description of Embodiment]

In the following, a mode for carrying out the invention (hereinafter referred to as an "embodiment") is described. It is to be noted that the description is given in the following order.
1. Embodiment
2. Modifications

### <1. Embodiment>

### [Overview of MPEG-DASH-based stream delivery system]

First, an overview of an MPEG-DASH-based stream delivery system to which the present technology can be applied is described.

FIG. 1 depicts an example of a configuration of an MPEG-DASH-based stream delivery system 30. In this configuration example, a media stream and an MPD (Medial Presentation Description) file are transmitted through a communication network transmission line (communication transmission line). The stream delivery system 30 is configured such that N service receivers 33-1, 33-2, ..., 33-N are connected to a DASH stream file server 31 and a DASH MPD server 32 through a CDN (Content Delivery Network) 34.

The DASH stream file server 31 generates a stream segment of the DASH specification (hereinafter referred to suitably as a "DASH segment") on the basis of media data of a predetermined content (video data, audio data, subtitle data and so forth) and sends out the segment in response to an HTTP request from a service receiver. The DASH stream file server 31 may be a server designated for streaming or a web (Web) server may be sometimes used also as the DASH stream file server 31.

Further, the DASH stream file server 31 transmits, in response to a request for a segment of a predetermined stream sent thereto from a service receiver 33 (33-1, 33-2, ..., 33-N) through the CDN 34, the segment of the stream to the receiver of the request source through the CDN 34. In this case, the service receiver 33 refers to the value of a rate described in an MPD (Media Presentation Description) file to select a stream of an optimum rate in response to a state of a network environment in which the client is placed, and performs requesting.

The DASH MPD server 32 is a server that generates an MPD file for acquiring a DASH segment generated by the DASH stream file server 31. The DASH MPD server 32 generates an MPD file on the basis of content metadata from a content management server (not depicted) and an address (url) of the segment generated by the DASH stream file server 31. It is to be noted that the DASH stream file server 31 and the DASH MPD server 32 may be a physically same server.

In the format of the MPD, for each of streams of videos, audio and so forth, an attribute is described using an element called representation (Representation). For example, in an MPD file, a rate is described in a separate representation for each plurality of video data streams of different rates. The service receiver 33 can refer to the values of the rates to select an optimum stream in response to a state of the network environment in which the service receiver 33 is placed as described hereinabove.

FIG. 2 depicts an example of a relationship of respective structures arranged hierarchically in an MPD file. As depicted in FIG. 2(a), in a media presentation (Media Presentation) as the entire MPD file, a plurality of periods (Period) partitioned by time intervals exists. For example, the first period starts from 0 second, the next period starts from 100 seconds, and so forth.

As depicted in FIG. 2(b), in a period, a plurality of adaptation sets (AdaptationSet) exists. Each adaptation set relies upon a difference in media type such as a video, audio or the like, a difference in language even in the same media type, a difference in visual point and so forth. As depicted in FIG. 2(c), in an adaptation set, a plurality of representations (Representation) exists. Each representation relies upon a difference in stream attribute such as a rate.

As depicted in FIG. 2(d), in a representation, segment info (SegmentInfo) is included. In this segment info, as depicted in FIG. 2(e), an initialization segment (Initialization Segment) and a plurality of media segments (Media Segment) describing information for each of segments (Segment) into which a period is partitioned further finely, exist. In a media segment, information of an address (url) for actually acquiring segment data of video, audio and so forth and other information exist.

It is to be noted that, between a plurality of representations included in an adaptation set, switching of a stream can be performed freely. Consequently, a stream of an optimum rate can be selected in response to a state of the network environment of the reception side, and video delivery free from interruption can be achieved.

### [Example of configuration of transmission and reception system]

FIG. 3 depicts an example of a configuration of a transmission and reception system 10 as the embodiment. The transmission and reception system 10 is configured from a service transmission system 100 and a service receiver 200. In the transmission and reception system 10, the service transmission system 100 corresponds to the DASH stream file server 31 and the DASH MPD server 32 of the stream delivery system 30 depicted in FIG. 1 described hereinabove. In the transmission and reception system 10, the service receiver 200 corresponds to the service receiver 33 (33-1, 33-2, ..., 33-N) of the stream delivery system 30 depicted in FIG. 1 described hereinabove.

The service transmission system 100 transmits a DASH/MP4 file, namely, an MP4 (ISOBMFF) stream including media streams (media segments) of an MPD file as a meta file and media streams (media segments) of a video, audio and so forth, through a communication network transmission line (refer to FIG. 1).

In the embodiment, the MP4 stream includes an encoded stream (encoded image data) corresponding to a divided region (partition) obtained by dividing a wide viewing angle image. Here, although the wide viewing angle image is a projection picture obtained by cutting out and plane packing part or the entirety of a spherical captured image, this is not restrictive.

An encoded stream corresponding to each divided region of a wide viewing angle image is obtained, for example, by individually encoding each divided region of the wide viewing angle image or by performing encoding using a tile function for converting each divided region of a wide viewing angle image into a tile. In the present embodiment, an encoded stream is in a hierarchically encoded form in order to make it possible for the reception side to easily perform temporal partial decoding.

An encoded stream corresponding to each divided region of a wide viewing angle image is transmitted together with information of the number of pixels and a frame rate of the divided region. In the embodiment, in MP4 that is a container in which an encoded stream of each divided region is included, a descriptor having the number of pixels and the frame rate of the divided region is included.

It is to be noted that, although it is also conceivable to transmit all encoded streams corresponding to divided regions of a wide viewing angle image, in the present embodiment, an encoded stream or streams corresponding to a divided region or regions requested are transmitted. This makes it possible to prevent a transmission region from being taken uselessly widely and achieve efficient use of a transmission band.

The service receiver 200 receives the above-described MP4 (ISOBMFF) stream sent thereto from the service transmission system 100 through the communication network transmission line (refer to FIG. 1). The service receiver 200 acquires meta information regarding the encoded stream corresponding to each divided region of the wide viewing angle image from the MPD file.

The service receiver 200 requests the service transmission system (distribution server) 100 for transmission of a predetermined number of encoded streams corresponding to a display region, receives and decodes the predetermined encoded streams to obtain image data of the display region, and displays an image. Here, in the service receiver 200, a predetermined number of values are determined to a decodable maximum number on the basis of a decoding capacity and the information of the number of pixels and the frame rate associated with the encoded stream corresponding to each divided region of the wide viewing angle image. Consequently, it becomes possible to reduce the frequency of switching of a delivery encoded stream with a movement of the display region by a motion or an operation of a user as far as possible, and the display performance in VR reproduction is improved.

Further, in the present embodiment, in the service receiver 200, in the case where it is predicted that the display region exceeds the decode range, the decode method is switched from temporal full decode to temporal partial decode, and then in the case where it is predicted that the display region converges into the decode range, the decode method is switched from the temporal partial decode to the temporal full decode. By switching the decode method to the temporal partial decode, the number of divided regions that can be decoded can be increased, and the frequency of switching of the delivery encoded stream with respect to a movement of the display region different from the prediction can be reduced. Thus, the display performance in VR reproduction is further improved.

FIG. 4 schematically depicts an example of a configuration of the entire transmission and reception system 10. The service transmission system 100 includes a 360° picture capture section 102, a plane packing section 103, a video encoder 104, a container encoder 105, and a storage 106.

The 360° picture capture section 102 images an imaging target by a predetermined number of cameras to obtain image data of a wide viewing angle image, that is, in the present embodiment, a spherical captured image (360° VR image). For example, the 360° picture capture section 102 performs imaging by a back to back (Back to Back) method using fisheye lenses to obtain a front face image and a rear face image of a very wide viewing angle having a viewing angle of 180° or more individually captured as a spherical captured image.

The plane packing section 103 cuts out and plane packs part or the entirety of the spherical captured image obtained by the 360° picture capture section 102 to obtain a projection picture. In this case, as the format type of the projection picture, for example, an equirectangular (Equirectangular) format, a cross cubic (Cross-cubic) format or the like is selected. It is to be noted that the plane packing section 103 carries out scheduling for the projection picture as occasion demands to obtain a projection picture of a predetermined resolution.

FIG. 5(a) depicts an example of a front face image and a rear face image of a very wide viewing angle as a spherical captured image obtained by the 360° picture capture section 102. FIG. 5(b) depicts an example of a projection picture obtained by the plane packing section 103. This example is an example in the case where the format type of the projection picture is the equirectangular format. This example is an example of a case in which the respective images depicted in FIG. 5(a) are cut out along latitudes indicated by broken lines. Further, FIG. 5(c) depicts another example of a projection picture obtained by the plane packing section 103. This example is an example of a case in which the format type of the projection picture is the cross cubic format.

Referring back to FIG. 4, the video encoder 104 carries out encoding, for example, MPEG4-AVC or HEVC encoding, for the image data of the projection picture from the plane packing section 103 to obtain encoded image data and generates an encoded stream including this encoded image data. In this case, the video encoder 104 divides the projection picture into a plurality of partitions (divided regions) and obtains an encoded stream corresponding to each of the partitions.

FIG. 6(a) depicts an example of division in the case where the format type of the projection picture is the equirectangular format. Meanwhile, FIG. 6(b) depicts an example of division in the case where the format type of the projection picture is the cross cubic format. It is to be noted that the way of division of a projection picture is not limited to these examples, and, for example, a case in which all partitions have sizes that are not same as each other is also conceivable.

The video encoder 104 performs, in order to obtain an encoded stream corresponding to each partition of a projection picture, for example, individual encoding of the partitions, collective encoding of the entire projection picture, or encoding using a tile function of converting each partition into a tile. This makes it possible to decode the encoded streams corresponding to the partitions independently of each other on the reception side.

Here, the video encoder 104 obtains encoded streams corresponding to the partitions by hierarchically encoding the partitions. FIG. 7(a) depicts an example of hierarchical encoding. The axis of ordinate indicates hierarchies. The axis of abscissa indicates a display order (POC: picture order of composition), and the left side is earlier in display time while the right side is later in display time. Each rectangular frame indicates a picture, and a numeral indicates a display order number. A solid line arrow mark indicates a reference relationship between pictures in encoding.

This example is an example in which the pictures are classified into three hierarchies of a sublayer 2 (Sub layer 2), a sublayer 1 (Sub layer 1), and a full layer (Full layer), and encoding is carried out for image data of pictures in the individual hierarchies. This example is an example in which M = 4, namely, three b (B) pictures exist between an I picture and a P picture. It is to be noted that, although a b picture does not become a reference picture, a B picture becomes a reference picture. Here, a picture of "0" corresponds to an I picture; a picture of "1" corresponds to a b picture; a picture of "2" corresponds to a B picture; a picture of "3" corresponds to a b picture; and a picture of "4" corresponds to a P picture.

In this hierarchical encoding, only the sublayer 2 can be selectively decoded, and in this case, image data of the 1/4 frame rate is obtained. Further, in this hierarchical encoding, the sublayer 1 and the sublayer 2 can be selectively decoded, and in this case, image data of the 1/2 frame rate is obtained. Furthermore, in the present hierarchical encoding, all of the sublayer 1, sublayer 2, and full layer can be decoded, and in this case, image data of the full frame rate is obtained.

Meanwhile, FIG. 7(b) depicts another example of hierarchical encoding. The axis of ordinate indicates hierarchies. The axis of abscissa indicates a display order (POC: picture order of composition), and the left side indicates earlier display time while the right side indicates later display time. Each of rectangular frames indicates a picture, and a numeral indicates a display order number. A solid line arrow mark indicates a reference relationship between pictures in encoding.

This example is an example in which pictures are classified into two hierarchies of a sublayer 1 (Sub layer 1) and a full layer (Full Layer), and encoding is carried out for image data of pictures of the individual hierarchies. This example is an example in which M = 4, namely, three b pictures exist between an I picture and a P picture. Here, the picture of "0" corresponds to an I picture; the pictures of "1" to "3" correspond to b pictures; and the picture of "4" corresponds to a P picture.

In this hierarchical encoding, only the sublayer 1 can be selectively decoded, and in this case, image data of the 1/4 frame rate is obtained. Further, in this hierarchical encoding, all of the sublayer 1 and the full layer can be decoded, and in this case, image data of the full frame rate is obtained.

The container encoder 105 generates a container including an encoded stream generated by the video encoder 104, here, an MP4 stream, as a delivery stream. In this case, a plurality of MP streams individually including encoded streams corresponding to partitions is generated. In the case where encoding using a tile function of converting each partition into a tile is performed, it is also possible to form one MP4 frame including encoded streams corresponding to all partitions as sub streams. However, in the present embodiment, it is assumed that a plurality of MP4 streams each including an encoded stream corresponding to each partition is generated.

It is to be noted that, in the case where encoding is performed using a tile function for converting each partition into a tile, the container encoder 105 generates a base MP4 stream (base container) including a parameter set of SPS including sublayer information and so forth in addition to a plurality of MP4 streams each including an encoded stream corresponding to the partition.

Here, encoding using a tile function for converting each partition into a tile is described with reference to FIG. 8. Tiles are obtained by dividing a picture in horizontal and vertical directions and can be encoded and decoded independently of each other. Since a tile allows in-screen prediction in a picture, loop filter, and refreshment of entropy encoding to be refreshed, regions obtained as tiles by division can be encoded and decoded independently of each other.

FIG. 8(a) depicts an example of a case in which a picture is divided into two partitions in each of vertical and horizontal directions and accordingly into a total of four partitions, and encoding is performed on each of the partitions as a tile. In this case, in regard to the partitions (tiles) a, b, c, and d obtained by the tile division, a list of the byte position of top data of each tile is described in the slice header as depicted in FIG. 8(b) to make independent decoding possible.

Since the positional relationship of a start block of a tile in a picture can be recognized from a relative position from the top left (top-left) of the picture, also in the case where an encoded stream of each partition (tile) is container-transmitted by a different packet, the original picture can be reconstructed by the reception side. For example, if the encoded streams of the partitions b and d each surrounded by a rectangular frame of a chain line as depicted in FIG. 8(c) are decoded, then display of the partitions (tiles) of b and d becomes possible.

It is to be noted that, also in the case where an encoded stream of each partition (tile) is container-transmitted by a different packet, sublayer information is arranged in one SPS in a picture. Therefore, meta information such as a parameter set is placed into a tile-based MP4 stream (tile-based container). Then, in the MP4 stream (tile container) of each partition, an encoded stream corresponding to the partition is placed as slice information.

Further, the container encoder 105 inserts information of the number of pixels and a frame rate of a partition into the layer of the container. In the present embodiment, a partition descriptor (partition_descriptor) is inserted into an initialization segment (IS: initialization segment) of the MP4 stream. In this case, a plurality of partition descriptors may be inserted as a maximum frequency in a unit of a picture.

FIG. 9 depicts an example of a structure (Syntax) of the partition descriptor. Meanwhile, FIG. 10 depicts the content of major information (Semantics) in the structure example. An 8-bit field of "partition_descriptor_tag" indicates a descriptor type and here indicates that the descriptor is a partition descriptor. An 8-bit field of "partition_descriptor_length" indicates a length (size) of the descriptor and indicates the number of succeeding bytes as the length of the descriptor.

An 8-bit field of "frame_rate" indicates a frame rate (full frame rate) of a partition (division picture). A 1-bit field of "tile_partition_flag" indicates whether or not picture division is performed by a tile method. For example, "1" indicates that the partition is picture-divided by a tile method, and "0" indicates that the partition is not picture-divided by a tile method. A 1-bit field of "tile_base_flag" indicates that, in the case of a tile method, whether or not the partition descriptor is a base container. For example, "1" indicates that the partition descriptor is a base container, and "0" indicates that the partition descriptor is a container other than the base container.

An 8-bit field of "partition_ID" indicates an ID of the partition. A 16-bit field of "whole_picture_size_horizontal" indicates the number of horizontal pixels of the entire picture. A 16-bit field of "whole_picture_size_vertical" indicates the number of vertical pixels of the entire picture.

A 16-bit field of "partition_horizontal_start_position" indicates a horizontal start pixel position of the partition. A 16-bit field of "partition_horizontal_end_position" represents a horizontal end pixel position of the partition. A 16-bit field of "partition_vertical_start_position" indicates a vertical start pixel position of the partition. A 16-bit field of "partition_vertical_end_position" represents a vertical end pixel position of the partition. The fields configure position information of the partition with respect to the entire picture and configure information of the number of pixels of the partition.

An 8-bit field of "number_of_sublayers" indicates the number of sublayers in hierarchical encoding of the partition. An 8-bit field of "sublayer_id" and an 8-bit field of "sublayer_frame_rate" are repeated in a for loop by a number of times equal to the number of sublayers. The field of "sublayer_id" indicates a sublayer ID of the partition, and the field of "sublayer_frame_rate" indicates the frame rate of the sublayer of the partition.

Referring back to FIG. 4, the storage 106 temporarily accumulates MP4 streams of partitions generated by the container encoder 105. It is to be noted that, in the case where the MP4 streams are divided by the tile method, the storage 106 accumulates also the tile-based MP4 streams. Of the MP4 streams accumulated in this manner, the MP4 stream of a partition whose transmission request is received is transmitted to the service receiver 200. It is to be noted that, in the case where the MP4 streams are in a form divided by the tile method, also the base MP4 stream is transmitted at the same time.

FIG. 11 depicts an example of a description of an MPD file compatible with a tile-based MP4 stream (tile-based container). In this MPD file, an adaptation set (AdaptationSet) corresponding to one MP4 stream (track) as a tile-based container exists.

In the adaptation set, by the description of '<AdaptationSet mimeType= "video/mp4" codecs= "hev1.xx.xx.Lxxx,xx,hev1.yy.yy.Lxxx,yy">",' an adaptation set (AdaptationSet) with respect to the video stream exists, the video stream is supplied with an MP4 file structure, and presence of an HEVC-encoded video stream (encoded image data) is indicated.

By the description of '<SupplementaryDescriptor schemeIdUri= "urn:brdcst:video:format_type" value/>,' a format type of the projection picture is indicated. By the description of '<SupplementaryDescriptor schemeIdUri= "urn:brdcst:video:formatrate" value/>,' a frame rate of pictures is indicated.

By the description of '<SupplementaryDescriptor schemeIdUri= "urn:brdcst:video:tilepartitionflag" value= "1"/>,' it is indicated that the partition is picture-divided by the tile method. By '<SupplementaryDescriptor schemeIdUri= "urn:brdcst:video:tilebaseflag" value/>,' it is indicated that the partition is a tile-based container.

Further, in the adaptation set, a representation (Representation) corresponding to the video stream exists. In this representation, by the descriptions of 'width= "" height= "" frameRate= "",' 'codecs="hev1.xx.xx.Lxxx,xx"' and 'level= "0",' a resolution, a frame rate, and a codec type are indicated, and further, it is indicated that, as tag information, the level "0" is applied. Further, by the description of '<BaseURL>videostreamVR.mp4</BaseURL>,' it is indicated that the location destination of the MP4 stream is indicated as 'videostreamVR.mp4.'

FIG. 12 depicts an example of description of an MPD file corresponding to the MP4 stream of each partition. In this MPD file, adaptation sets (AdaptationSet) individually corresponding to a plurality of MP4 streams (tracks) exist. It is to be noted that, in the example depicted, for simplification of the drawing, only two adaptation sets (AdaptationSet) are depicted.

Description is given of the first adaptation set, and since the other adaptation sets are similar, description of them is omitted. In the adaptation set, by the description of '<AdaptationSet mimeType= "video/mp4" codecs= "hev1.xx.xx.Lxxx,xx,hev1.yy.yy.Lxxx,yy">,' an adaptation set (AdaptationSet) with respect to the video stream exists, the video stream is supplied with the MP4 file structure, and presence of the HEVC-encoded video stream (encoded image data) is indicated.

By the description of '<SupplementaryDescriptor schemeIdUri= "urn:brdcst:video:format_type" value/>,' a format type of the projection picture is indicated. By the description of '<SupplementaryDescriptor schemeIdUri= "urn:brdcst:video:framerate" value/>,' a frame rate of partitions (full frame rate) is indicated.

By the description of '<SupplementaryDescriptor schemeIdUri= "urn:brdcst:video:tilepartitionflag" value= "1"/>,' it is indicated whether or not the partition is picture-divided by the tile method. By the description of '<SupplementaryDescriptor schemeIdUri= "urn:brdcst:video:tilebaseflag" value= "0"/>,' it is indicated that the partition is a container other than the tile-based container. By the description of '<SupplementaryDescriptor schemeIdUri= "urn:brdcst:video:partitionid" value= "1"/>,' it is indicated that the partition ID is '1.'

By the description of '<SupplementaryDescriptor schemeIdUri= "urn:brdcst:video:wholepicturesizehorizontal" value/>,' the number of horizontal pixels of the whole picture is indicated. By the description of '<SupplementaryDescriptor schemeIdUri= "urn:brdcst:video:wholepicturesizevertical" value/>,' the number of vertical pixels of the whole picture is indicated.

By the description of '<SupplementaryDescriptor schemeIdUri= "urn:brdcst:video:partitionstartpositionhorizontal" value/>,' a horizontal start pixel position of the partition is indicated. By the description of '<SupplementaryDescriptor schemeIdUri= "urn:brdcst:video:partitiontartpositionvertical" value/>,' a horizontal end pixel position of the partition is indicated. By the description of '<SupplementaryDescriptor schemeIdUri= "urn:brdcst:video:partitionendpositionhorizontal" value/>,' a vertical start pixel position of the partition is indicated. By the description of '<SupplementaryDescriptor schemeIdUri= "urn:brdcst:video:partitionendpositionvertical" value/>,' a vertical end pixel position of the partition is indicated.

By the description of '<SupplementaryDescriptor schemeIdUri= "urn:brdcst:video:partitionsublayerid" value/>,' a sublayer ID of the partition is indicated. By the description of '<SupplementaryDescriptor schemeIdUri= "urn:brdcst:video:partitionsublayerframerate" value/>,' a frame rate of the sublayer of the partition is indicated. The two descriptions are repeated by a number of times equal to the number of sublayers.

Further, in the adaptation set, a representation (Representation) corresponding to the video stream exists. In this representation, by the descriptions of 'width= "" height= "" frameRate= "",' 'codecs="hev1.xx.xx.Lxxx,xx",' and 'level= "0",' a resolution, a frame rate, and a codec type are indicated, and further, it is indicated that, as tag information, the level "0" is provided. Further, by the description of '<BaseURL>videostreamVR0.mp4</BaseURL>,' it is indicated that the location destination of the MP4 stream is indicated as 'videostreamVR0.mp4.'

FIG. 13 schematically depicts an MP4 stream (track) in the case where encoding using a tile function for converting each partition into a tile is performed. In this case, one tile-based MP4 stream (tile-based container) and MP4 streams (tile containers) of four partitions exist. Each of the MP4 streams is configured such that each random access period begins with an initialization segment (IS: initialization segment), which is followed by boxes of "styp," "sidx (Segment index box)," "ssix (Sub-segment index box)," "moof" (Movie fragment box)," and "mdat (Media data box)."

The initialization segment (IS) has a box (Box) structure based on ISOBMFF (ISO Base Media File Format). The partition descriptor (refer to FIG. 9) is inserted in the initialization segment (IS). In the tile-based MP4 stream (tile-based container), the partition descriptor is "tile base flag = 1." Meanwhile, in the MP4 streams (tile containers) of the first to fourth partitions, "partition ID" is 1 to 4.

In the "styp" box, segment type information is placed. In the "sidx" box, range information of each track (track) is placed, and a position of "moof"/"mdat" is indicated while also a position of each sample (picture) in "mdat" is indicated. In the "ssix" box, classification information of the track (track) is placed, and classification into I/P/B types is made.

In the "moof" box, control information is placed. In the mdat" box of the tile-based MP4 stream (tile-based container), NAL units of "VPS," "SPS," "PPS," "PSEI," and "SSEI" are placed. Meanwhile, in the mdat" box of the MP4 stream (tile container) of each partition, a NAL unit of "SLICE" having encoded image data of the individual partition is placed.

FIG. 14 schematically depicts an MP4 stream (track) in the case where each partition is encoded individually. In this case, MP4 streams of four partitions exist. Each of the MP4 streams is configured such that each random access period begins with an initialization segment (IS: initialization segment), which is followed by boxes of "styp," "sidx (Segment index box)," "ssix (Sub-segment index box)," "moof" (Movie fragment box)," and "mdat (Media data box)," similarly.

The initialization segment (IS) has a box (Box) structure based on ISOBMFF (ISO Base Media File Format). The partition descriptor (refer to FIG. 9) is inserted in the initialization segment (IS). In the MP4 streams of the first to fourth partitions, "partition ID" is 1 to 4.

In the "styp" box, segment type information is placed. In the "sidx" box, range information of each track (track) is placed, and a position of "moof"/"mdat" is indicated while also a position of each sample (picture) in "mdat" is indicated. In the "ssix" box, classification information of the track (track) is placed, and classification into I/P/B types is made.

In the "moof" box, control information is placed. In the mdat" box of the MP4 stream of each partition, NAL units of "VPS," "SPS," "PPS," "PSEI," "SLICE," and "SSEI" are placed.

Referring back to FIG. 4, the service receiver 200 includes a container decoder 203, a video decoder 204, a renderer 205, and a transmission request section 206. The transmission request section 206 requests the service transmission system 100 for transmission of MP4 streams of a predetermined number of partitions corresponding to a display region from among partitions of a projection picture.

In this case, the transmission request section 206 determines the predetermined number of values as a maximum decodable value or a value close to the maximum decodable value on the basis of a decoding capacity and information of the number of pixels and a frame rate of an encoded stream of each partition of a projection picture. Here, the information of the number of pixels and a frame rate of an encoded stream of each partition can be acquired from an MPD file (refer to FIG. 12) received from the service transmission system 100 in advance.

### [Example of calculation of maximum value]

FIG. 15 depicts an example in which a projection picture of the 8 K/60 Hz class is divided by a partition size of 1920 × 1080 (Full HD). In this case, the number of in-plane pixels of the partition is 1920 * 1080 =2073600, and the pixel rate is 1920 * 1080 * 60 = 124416000. In this case, the level value of the complexity required for decoding of the partition is "Level 4.1."

For example, in the case where the service receiver 200 includes a decoder of "Level 5.1" for decoding of 4 K/60 Hz, the maximum number of in-plane Luma pixels is 8912896, and the pixel rate (the maximum number of pixels processable every second) is 534773760. Therefore, in this case, 534773760/124416000 = 4.29..., and the maximum value is calculated as 4. In this case, the service receiver 200 can decode four partitions in the maximum. Four partitions indicated by an arrow mark P depict an example of the partitions corresponding to the display region selected in this case.

On the other hand, in the case where the service receiver 200 includes a decoder of "Level 5.2" for decoding of 4 K/120 Hz, the maximum number of in-plane Luma pixels is 8912896, and the pixel rate (the maximum number of pixels processable every second) is 1069547520. Therefore, in this case, 1069547520/124416000 = 8.59..., and the maximum value is calculated as 8. In this case, the service receiver 200 can decode eight partitions in the maximum. Eight partitions indicated by an arrow mark Q depict an example of the partitions corresponding to the display region selected in this case.

FIG. 16 depicts an example in which a projection picture of the 8 K/60 Hz class is divided by a partition size of 1280 × 960 (4VGA). In this case, the number of in-plane pixels of the partition is 1280 * 960 = 1228800, and the pixel rate is 1280 * 960 * 60 = 73728000. In this case, the level value of the complexity required for decoding of the partition is "Level 4.1."

For example, in the case where the service receiver 200 includes a decoder of "Level 5.1" for decoding of 4 K/60 Hz, the maximum number of in-plane Luma pixels is 8912896, and the pixel rate (the maximum number of pixels processable every second) is 534773760. Therefore, in this case, 534773760/73728000 = 7.25..., and the maximum value is calculated as 7. In this case, the service receiver 200 can decode 7 partitions in the maximum. Six partitions indicated by an arrow mark P depict an example of the partitions corresponding to the display region selected in this case.

On the other hand, in the case where the service receiver 200 includes a decoder of "Level 5.2" for decoding of 4 K/120 Hz, the maximum number of in-plane Luma pixels is 8912896, and the pixel rate (the maximum number of pixels processable every second) is 1069547520. Therefore, in this case, 1069547520/73728000 = 14.5..., and the maximum value is calculated as 14. In this case, the service receiver 200 can decode 14 partitions in the maximum. Twelve partitions indicated by an arrow mark Q depict an example of the partitions corresponding to the display region selected in this case.

FIG. 17 depicts an example in which a projection picture exceeding the 8 K/60 Hz class is divided by a partition size of 1280 × 960 (4VGA). In this case, the number of in-plane pixels of the partition is 1280 * 960 = 1228800, and the pixel rate is 1280 * 960 * 60 = 73728000. In this case, the level value of the complexity required for decoding of the partition is "Level 4.1."

For example, in the case where the service receiver 200 includes a decoder of "Level 5.1" for decoding of 4 K/60 Hz, the maximum number of in-plane Luma pixels is 8912896, and the pixel rate (the maximum number of pixels processable every second) is 534773760. Therefore, in this case, 534773760/73728000 = 7.25..., and the maximum value is calculated as 7. In this case, the service receiver 200 can decode 7 partitions in the maximum. Seven partitions indicated by an arrow mark P depict an example of the partitions corresponding to the display region selected in this case.

On the other hand, in the case where the service receiver 200 includes a decoder of "Level 5.2" for decoding of 4 K/120 Hz, the maximum number of in-plane Luma pixels is 8912896, and the pixel rate (the maximum number of pixels processable every second) is 1069547520. Therefore, in this case, 1069547520/73728000 = 14.5..., and the maximum value is calculated as 14. In this case, the service receiver 200 can decode 14 partitions in the maximum. Fourteen partitions indicated by an arrow mark Q depict an example of the partitions corresponding to the display region selected in this case.

FIG. 18 depicts an example in which a projection picture exceeding the 8 K/60 Hz class is divided by a partition size of 1280 × 720 (720p HD). In this case, the number of in-plane pixels of the partition is 1280 * 720 = 921600, and the pixel rate is 1280 * 720 * 60 = 55296000. In this case, the level value of the complexity required for decoding of the partition is "Level 4."

For example, in the case where the service receiver 200 includes a decoder of "Level 5.1" for decoding of 4 K/60 Hz, the maximum number of in-plane Luma pixels is 8912896, and the pixel rate (the maximum number of pixels processable every second) is 534773760. Therefore, in this case, 534773760/55296000 = 9.67..., and the maximum value is calculated as 9. In this case, the service receiver 200 can decode 9 partitions in the maximum. Eight partitions indicated by an arrow mark P depict an example of the partitions corresponding to the display region selected in this case.

On the other hand, in the case where the service receiver 200 includes a decoder of "Level 5.2" for decoding of 4 K/120 Hz, the maximum number of in-plane Luma pixels is 8912896, and the pixel rate (the maximum number of pixels processable every second) is 1069547520. Therefore, in this case, 1069547520/55296000 = 19.34..., and the maximum value is calculated as 19. In this case, the service receiver 200 can decode 19 partitions in the maximum. Eighteen partitions indicated by an arrow mark Q depict an example of the partitions corresponding to the display region selected in this case.

FIG. 19 collectively depicts the maximum number of decodable partitions according to partition sizes in a decoder of "Level 5.1." In the case where the partition size is 1920 × 1080 (Full HD), while the maximum number of pixels processable every second by the decoder is 534773760, the pixel rate of the partition is 124416000 (equivalent to Level 4.1), and the maximum number of decodable partitions is 4. On the other hand, in the case where the partition size is 1280 × 960 (4VGA), while the maximum number of pixels processable every second by the decoder is 534773760, the pixel rate of the partition is 73728000 (equivalent to Level 4.1), and the maximum number of decodable partitions is 7.

Further, in the case where the partition size is 1280 × 720 (720p HD), while the maximum number of pixels processable every second by the decoder is 534773760, the pixel rate of the partition is 55296000 (equivalent to Level 4.1), and the maximum number of decodable partitions is 9. Further, in the case where the partition size is 960 × 540 (Q HD), while the maximum number of pixels processable every second by the decoder is 534773760, the pixel rate of the partition is 33177600 (equivalent to Level 3.1), and the maximum number of decodable partitions is 16.

FIG. 20 collectively depicts the maximum number of decodable partitions according to partition sizes in a decoder of "Level 5.2." In the case where the partition size is 1920 × 1080 (Full HD), while the maximum number of pixels processable every second by the decoder is 1069547520, the pixel rate of the partition is 124416000 (equivalent to Level 4.1), and the maximum number of decodable partitions is 8. On the other hand, in the case where the partition size is 1280 × 960 (4VGA), while the maximum number of pixels processable every second by the decoder is 1069547520, the pixel rate of the partition is 73728000 (equivalent to Level 4.1), and the maximum number of decodable partitions is 14.

Further, in the case where the partition size is 1280 × 720 (720p HD), while the maximum number of pixels processable every second by the decoder is 1069547520, the pixel rate of the partition is 55296000 (equivalent to Level 4.1), and the maximum number of decodable partitions is 19. Meanwhile, in the case where the partition size is 960 × 540 (Q HD), while the maximum number of pixels processable every second by the decoder is 1069547520, the pixel rate of the partition is 33177600 (equivalent to Level 3.1), and the maximum number of decodable partitions is 32.

It is to be noted that the transmission request section 206 may include such a table as depicted in FIG. 19 or 20 such that it refers to the table to determine a maximum value (the maximum number of decodable partitions).

It is to be noted that, although the foregoing description is directed to a case in which the number of pixels (sizes) and frame rates of the respective partitions are uniform, the number of pixels and the frame rates of the respective partitions may not be uniform. Also in this case, the transmission request section 206 selects, as a partition corresponding to the display region for which transmission is to be requested to the service transmission system 100, a decodable maximum number or a proximate number of partitions on the basis of the pixel rates of the respective partitions.

FIG. 21 depicts a case in which the number of pixels of respective partitions is not uniform. ID1, ID2, ID3, ID4, ID5, and ID6 indicate partition IDs of partitions at positions (H0, V0), (H0, V1), (H1, V1), (H0, V2), (H1, V2), and (H0, V3), respectively.

It is assumed that the pixel rates of the partitions whose partition ID is ID1, ID2, ID3, ID4, ID5, and ID6 are R1, R2, R3, R4, R5, and R6, respectively. In the case where the decoder of the service receiver 200 is that of "Level X" and the pixel rate corresponding to this is D1, for example, if R1 + R2 + R3 < D1, then it is considered that decoding of the partitions whose partition ID is ID1, ID2, and ID3 is possible.

Referring back to FIG. 4, the container decoder 203 extracts an encoded stream of each partition from a predetermined number of MP4 streams transmitted thereto from the service transmission system 100 and corresponding to the display region, and sends the encoded streams to the video decoder 204. In the case where division has been performed by the tile method, not only MP4 streams of a predetermined number of partitions corresponding to the display region but also a tile-based MP4 stream is transmitted from the service transmission system 100. Therefore, the container decoder 203 sends also an encoded stream including parameter set information and so forth included in the tile-based MP4 stream to the video decoder 204.

The video decoder 204 performs a decoding process for the encoded streams of the predetermined number of partitions corresponding to the display region to obtain image data of the predetermined number of partitions corresponding to the display region. The renderer 205 performs a rendering process for the image data of the predetermined number of partitions obtained in this manner to obtain a rendering image (image data) corresponding to the display region.

### [Case where display region moves]

A case in which a display region moves is described. The movement of the display region is controlled in response to sensor information, pointing information, sound UI information and so forth. For example, in the case where an HMD (Head Mounted Display) is used as the display apparatus, the movement of the display region is controlled on the basis of information of the direction and the amount of the movement obtained by a gyro sensor or the like incorporated in the HMD in response to the movement of the neck of the user. On the other hand, in the case where a display panel is used as the display apparatus, the movement of the display region is controlled on the basis of pointing information by a user operation or sound UI information of the user.

FIG. 22 depicts a case in which an HMD is used as the display apparatus. In this case, if the user wearing the HMD turns its neck from left to right like P1 → P2 → P3 as depicted in FIG. 22(b), then the display region observed on the HMD moves like P1' → P2' → P3' as depicted in FIG. 22(a).

Meanwhile, FIG. 23 depicts a case in which a display panel such as a TV is used as the display apparatus. In this case, if the sound instruction is changed like P1 → P2 → P3 as depicted in FIG. 23(b), then the display region displayed on the display panel moves like P1' → P2' → P3' as depicted in FIG. 23(a).

In the case where it is predicted that the display region exceeds the decode range, then the transmission request section 206 determines switching of the set of MP4 streams of the predetermined number of partitions corresponding to the display region in order to establish the decode range including the display region, and requests the service transmission system 100 for transmission of a new set (delivery stream set).

FIG. 24 depicts an example of switching of a delivery stream set with a movement of the display region. This example is an example in which MP4 streams of four partitions corresponding to the display region are transmitted (delivered). When the display region is positioned as depicted in FIG. 24(a), the partitions corresponding to the display region become four partitions at the positions of (H0, V1), (H1, V1), (H0, V2), and (H1, V2), and MP4 streams of the partitions are transmitted, for example, in the order of (1) → (2) → (5) → (6).

In this case, in the service receiver 200, the encoded streams are extracted from the MP4 streams of the partitions and are decoded by the video decoder 204. In particular, the decode range in this case is the partitions at the positions of (H0, V1), (H1, V1), (H0, V2), and (H1, V2).

Then, when the display region moves to a position depicted in FIG. 24(b), the partitions corresponding to the display region become four partitions at the positions of (H1, V1), (H2, V1), (H1, V2), and (H2, V2). Therefore, switching of the delivery stream set is performed, and the MP4 streams of the partitions are transmitted, for example, in the order of (2) → (3) → (6) → (7).

In this case, in the service receiver 200, the encoded streams are extracted from the MP4 streams of the partitions and are decoded by the video decoder 204. In particular, the decode range in this case is the partitions at the positions of (H1, V1), (H2, V1), (H1, V2), and (H2, V2).

Then, when the display region moves to a position depicted in FIG. 24(c), the partitions corresponding to the display region become four partitions at the positions of (H2, V1), (H3, V1), (H2, V2), and (H3, V2). Therefore, switching of the delivery stream set is performed, and the MP4 streams of the partitions are transmitted, for example, in the order of (3) → (4) → (7) → (8).

In this case, in the service receiver 200, the encoded streams are extracted from the MP4 streams of the partitions and are decoded by the video decoder 204. In particular, the decode range in this case is the partitions at the positions of (H2, V1), (H3, V1), (H2, V2), and (H3, V2).

FIG. 25 depicts another example of switching of a delivery stream set with a movement of the display region. This example is an example in which MP4 streams of six partitions corresponding to the display region are transmitted (delivered). When the display region is positioned on the left side in FIG. 25(a), the partitions corresponding to the display region become six partitions at the positions of (H0, V1), (H1, V1), (H2, V1), (H0, V2), (H1, V2), and (H2, V2), and MP4 streams of the partitions are transmitted, for example, in the order of (1) → (2) → (3) → (5) → (6) → (7).

In this case, in the service receiver 200, the encoded streams are extracted from the MP4 streams of the partitions and are decoded by the video decoder 204. In particular, the decode range in this case is the partitions at the positions of (H0, V1), (H1, V1), (H2, V1), (H0, V2), (H1, V2), and (H2, V2).

Then, when the display region moves to a position depicted on the right side in FIG. 25(a), the partitions corresponding to the display region remain to be the six partitions as the partitions at the positions of (H0, V1), (H1, V1), (H2, V1), (H0, V2), (H1, V2), and (H2, V2). Therefore, switching of the delivery stream set is not performed, and the MP4 streams of the partitions are transmitted, for example, in the order of (1) → (2) → (3) → (5) → (6) → (7).

In this case, in the service receiver 200, the encoded streams are extracted from the MP4 streams of the partitions and are decoded by the video decoder 204. In particular, the decode range in this case is the partitions at the positions of (H1, V1), (H2, V1), (H1, V2), and (H2, V2).

Then, when the display region moves to a position depicted in FIG. 25(b), the partitions corresponding to the display region become six partitions at the positions of (H1, V1), (H2, V1), (H3, V1), (H1, V2), (H2, V2), and (H3, V2). Therefore, switching of the delivery stream set is performed, and the MP4 streams of the partitions are transmitted, for example, in the order of (2) → (3) → (4) → (6) → (7) → (8).

In this case, in the service receiver 200, the encoded streams are extracted from the MP4 streams of the partitions and are decoded by the video decoder 204. In particular, the decode range in this case is the partitions at the positions of (H1, V1), (H2, V1), (H3, V1), (H1, V2), (H2, V2), and (H3, V2).

As apparent from the examples of FIGS. 24 and 25 described above, it can be recognized that, as the number of partitions corresponding to the display region increases, the frequency of switching of the delivery stream set with a change of the display region decreases. If switching of the delivery stream set occurs, then it becomes necessary to issue a transmission request and receive transmission of MP4 streams of a new set, and a time lag appears after a decoding process is completed until display is started, so that the display performance in VR reproduction is deteriorated.

In the present embodiment, since the number of partitions corresponding to the display region is set to the maximum decodable number by the service receiver 200 or a value proximate to the maximum, the switching frequency of the delivery stream set with a movement of the display region can be suppressed and the display performance in VR reproduction can be improved.

As described above, in the case where it is predicted that the display region exceeds the decode range, the transmission request section 206 determines switching of the delivery stream set and issues a request to the service transmission system 100 to transmit a new delivery stream set. Here, when the display region satisfies the condition for the position and the condition for the movement, it is predicted that the display region exceeds the decode range. This prediction is performed by a control section that controls operation of each component of the service receiver 200, which is not depicted in FIG. 4.

FIG. 26(a) depicts a state in which the display region fits in a current decode range. FIG. 26(b) depicts a state in which the display region moves in a direction indicated by an broken line arrow mark m from the state in FIG. 26(a). It is to be noted that, in FIG. 26, a solid line arrow mark n indicates a moving speed and a moving direction of the display region detected in several preceding frames.

The transmission request section 206 predicts that the display region exceeds the decode range in the case where an end of the display region reaches a range defined by an end threshold value range (TH_v, Th_h; set in the receiver) of a current decode range and the moving speed detected in the several preceding frames is equal to or higher than a fixed value, or an increasing acceleration is indicated. Then, the transmission request section 206 determines, on the basis of the movement prediction of the display region, a new predetermined number of partitions such that a new decode range included in the display region is obtained and issues a request for transmission of a new delivery stream set included in the MP4 streams to the service transmission system 100.

Here, in the case where a new predetermined number of partitions are determined on the basis of the movement prediction of the display region, and in the case where the predetermined number of partitions do not fit in the decode range of the display region after the movement, it is necessary to determine a new delivery stream set and issue a request for transmission of the new delivery stream set to the service transmission system 100, and a time lag after the decoding process is completed until display is started appears, so that there is the possibility that the display performance in VR reproduction may be deteriorated.

FIG. 27 depicts a state of switching of the decode range in the case where the display region successively moves. In FIG. 27, a solid line arrow mark indicates a movement prediction direction of the display region, and a broken line arrow mark indicates an actual moving direction of the display region. FIG. 27(b) depicts a state of a case in which switching of the delivery stream set is performed on the basis of a movement prediction direction of the display region from a state of FIG. 27(a) and the actual moving direction of the display region coincides with the movement prediction direction. In this case, since the display region is included in the decode range, there is no problem.

Meanwhile, FIG. 27(c) depicts a case in which switching of the delivery stream set is performed on the basis of the movement prediction direction of the display region from the state of FIG. 27(b) and the actual moving direction of the display region coincides with the movement prediction direction. In this case, since the display region fits in the decode range, there is no problem.

FIG. 27(d) depicts a state in which switching of the delivery stream set is performed on the basis of the movement prediction direction of the display region from the state of FIG. 27(b) and the actual moving direction of the display region does not coincide with the movement prediction direction. In this case, since the display region does not fit in the decode range, it is necessary to perform switching of the stream set again to change to a decode range indicated by hatching lines such that the display region fits in the decode range. In such a case as just described, there is the possibility that a time lag may appear and the display may temporarily freeze until switching is performed.

Therefore, in the present embodiment, in the case where partitions corresponding to the display region are to be determined on the basis of movement prediction of the display region, the number of partitions is increased to expand the decode range such that the display region after the movement is positioned in the middle of the decode range. In short, the decode mode is changed from a normal decode mode to a wide decode mode. In this case, the service receiver 200 performs temporal partial decode, namely, decode of a sublayer, for part of or all of the encoded streams of a predetermined number of partitions such that decoding of the predetermined number of partitions in the wide decode mode becomes possible.

FIG. 28 depicts a state of switching of the decode range in the case where the display region successively moves. In FIG. 28, a solid line arrow mark indicates a movement prediction direction of the display region, and a broken line arrow mark indicates an actual moving direction of the display region. FIG. 28(b) depicts a state of a case in which switching of the delivery stream set is performed on the basis of a movement prediction direction of the display region from a state of FIG. 28(a) and the actual moving direction of the display region coincides with the movement prediction direction. In this case, assuming that temporal partial decode is performed, the number of partitions is increased to expand the decode range. In this case, the display region fits in the decode range.

FIG. 28(c) depicts a state in which the display region moves from the state of FIG. 28(b). In this case, a state in which the actual moving direction of the display region coincides with the movement prediction direction is depicted. In this case, since the decode range is expanded, the display region moves within the decode range, and therefore, switching of the delivery stream set is not performed. Meanwhile, FIG. 28(d) depicts a state in the case where the display region is moved from the state of FIG. 28(b). In this case, the state of a case in which the actual moving direction of the display region does not coincide with the movement prediction direction is depicted. In this case, since the decode range is expanded, the display region moves within the decode range, and therefore, switching of the delivery stream set is not performed.

FIG. 29 depicts a frame rate of each partition in the case where video encoding is ready for a tile. In this case, the frame rate and layering in hierarchical encoding are same among all partitions. FIG. 29(a) depicts that, in the normal decode mode, a decoding process at the full frame rate is performed. FIG. 29(b) depicts that, in the wide decode mode, temporal partial decode, for example, a decode process at the half rate, is performed.

FIG. 30 depicts a frame rate of a partition in the case where video encoding performs encoding of each partition into an independent stream. In this case, since encoding of each partition can be performed separately, the frame rate and layering of hierarchical encoding may not be same among all partitions. In the example depicted in FIG. 30, while central six partitions are encoded at a high frame rate of 120 Hz, peripheral ten partitions are encoded at a low frame rate of 60 Hz.

FIG. 30(a) depicts that, in the normal decode mode, a decoding process is performed at the full frame rate. FIG. 30(b) depicts that, in the wide decode mode, temporal partial decode, for example, a decoding process at the half rate, is performed. Further, FIG. 30(c) depicts that, in the wide decode mode, a decode process at the full frame rate is performed for central six partitions while a decode process at a quarter rate is performed for peripheral 10 partitions.

In the present embodiment, in the case where it is predicted that the display region fits in the decode range of the normal decode mode after change from the normal decode mode to the wide decode mode, the decode mode is changed back to the normal decode mode. In this case, the transmission request section 206 issues a request to the service transmission system 100 to stop transmission of any other than a predetermined number of partitions in the normal decode mode.

This convergence prediction is performed by observing the change of movement of the display region. This prediction is performed by a control section that controls operation of each component of the service receiver 200, which is not depicted in FIG. 4. For example, in the case where an HMD is used as the display apparatus, the decision of convergence can be performed on the basis of posture angle and azimuth information obtained from the posture detection sensor incorporated in the HMD.

FIG. 31(a) schematically depicts a configuration of the posture detection sensor. This posture detection sensor includes a vibration gyro and a three-axis acceleration sensor. Change conditions of the positions of the respective three axes including pitch, roll, and yaw by the vibration gyro and accelerations applied in the XYZ axes by the three-axis acceleration sensor are integrated to finally output posture angles (roll angle and pitch angle) and information of the azimuth.

Since the information of the three axes is outputted from the posture detection sensor, sensor information on the real time basis in regard to the movement is provided. As depicted in FIG. 31(b), by measuring the three-axis information in a unit of a frame, a movement of the neck of the user, and accordingly, a change of the movement of the display region, can be known, and by confirming that movement is rarely found in several frames in the past, convergence (end of the movement of the display region) is decided.

FIG. 32 depicts an example of mode change control. At T1, no movement of the display region is detected, and therefore, the normal decode mode is maintained. At T2, a movement of the display region is detected, and with this, the decode mode is switched from the normal decode mode to the wide decode mode. At T3, a movement of the display region is detected. However, since the position of the display region remains within the wide decode range at T2, update of the decode range is not performed.

At T4, a movement of the display region is detected, and it is detected that the position of the display region approaches the boundary of the wide decode range at T3. Thus, a request for a new stream is issued to a server (service transmission system 100), and the decode range is updated. At T5, an end of the movement of the display region, in other words, convergence, is decided, and the decode mode is switched from the wide decode mode to the normal decode mode.

A flow chart of FIG. 33 depicts an example of a control process for decode range change and mode change by the control section of the service receiver 200. The control section executes this control process, for example, in a video frame cycle.

The control section starts processing at step ST1. Then at step ST2, the control section detects a movement of the display region. The movement of the display region is detected, for example, on the basis of sensor information, pointing information, sound UI information or the like as described hereinabove.

Then at step ST3, the control section decides whether or not it is predicted that the display region exceeds the current decode range. This decision is made depending upon whether or not the display region satisfies the position condition and the movement condition as described hereinabove. In the case where it is decided that it is not predicted that the display region exceeds the current decode range, the control section decides at step ST4 whether or not the current decode mode is the wide decode mode. When the current decode mode is the wide decode mode, the control section advances its processing to step ST5.

At the step ST5, the control section decides whether or not it is predicted that the display region converges into the decode range corresponding to the normal decode mode. This decision is made by observing the change of the movement of the display region including several frames in the past as described hereinabove. When it is predicted that the display region converges, then the control section changes the decode mode from the wide decode mode to the normal decode mode at step ST6.

After the process at step ST6, the control section ends the processing at step ST7. It is to be noted that, when the current decode mode is not the wide decode mode at step ST4 or when it is not predicted that the display region converses at step ST5, the control section advances the processing to step ST7, at which it ends the processing.

On the other hand, in the case where it is predicted at step ST3 that the display region exceeds the current decode range, the control section decides at step ST8 whether or not the current decode mode is the normal decode mode. When the current decode mode is the normal decode mode, the control section changes the current decode mode to the wide decode mode at step ST9 and changes the decode range at step ST10. When the decode range is to be changed, a request for a set (delivery stream set) of MP4 streams of a predetermined number of partitions corresponding to the display region and according to the decode mode is issued to a server (service transmission system 100) to receive the stream set.

After the process at step ST10, the control section advances the processing to step ST7, at which it ends the processing. On the other hand, when the current decode mode is the wide decode mode at step ST8, the control section advances the processing to step ST9, at which it changes the decode range. Thereafter, the control section advances the processing to step ST7, at which it ends the processing.

### "Example of configuration of service transmission system"

FIG. 34 depicts an example of a configuration of the service transmission system 100. The service transmission system 100 includes a control section 101, a user operation section 101a, the 360° picture capture section 102, the plane packing section 103, the video encoder 104, the container encoder 105, and a communication section 107 including the storage 106.

The control section 101 includes a CPU (Central Processing Unit) and controls operation of each component of the service transmission system 100 on the basis of a control program. The user operation section 101a includes a keyboard, a mouse, a touch panel, or a remote controller for allowing a user to perform various operations.

The 360° picture capture section 102 images an imaging target by a predetermined number of cameras to obtain image data of a spherical captured image (360° VR image). For example, the 360° picture capture section 102 performs imaging by a back to back (Back to Back) method to obtain a front face image and a rear face image of a very wide viewing angle image each taken by using fisheye lenses and each having a viewing angle equal to or greater than 180° as a spherical captured image (refer to FIG. 5(a)).

The plane packing section 103 cuts out and plane packs part or the entirety of a spherical captured image obtained by the 360° picture capture section 102 to obtain a rectangular projection picture (refer to FIGS. 5(b) and 5(c)). In this case, as the format type of the projection picture, for example, the equirectangular (Equirectangular) format, the cross cubic (Cross-cubic) format or the like is selected.

The video encoder 104 performs encoding of, for example, MPEG4-AVC, HEVC or the like for image data of a projection picture from the plane packing section 103 to obtain encoded image data and generates an encoded stream including the encoded image data. In this case, the video encoder 104 divides the projection picture into a plurality of partitions (divided regions) and obtains encoded streams corresponding to the partitions.

Here, the video encoder 104 performs, in order to obtain an encoded stream corresponding to each partition of a projection picture, for example, individual encoding of the partitions, collective encoding of the entire projection picture, or encoding using a tile function of converting each partition into a tile. Consequently, on the reception side, it is possible to decode the encoded streams corresponding to the partitions independently of each other. Further, the video encoder 104 performs hierarchical encoding for each partition (refer to FIGS. 7(a) and 7(b)). This hierarchical encoding makes it possible for the reception side to easily perform temporal partial decode.

The container encoder 105 generates a container including an encoded stream generated by the video encoder 104, here, an MP4 stream, as a delivery stream. In this case, a plurality of MP4 streams each including an encoded stream corresponding to each partition is generated (refer to FIGS. 13 and 14).

Here, in the case where encoding using a tile function for converting each partition into a tile is performed, the container encoder 105 generates a base (base) MP4 (base container) including a parameter set such as an SPS including sublayer information and so forth in addition to a plurality of MP4 streams each including an encoded stream corresponding to each partition (refer to FIG. 13).

Further, the container encoder 105 inserts a partition descriptor (refer to FIG. 9) into a layer of the container, in particular, into the initialization segment (IS) of MP4. This partition descriptor includes the number of pixels of the partitions, information of the frame rate and so forth.

The storage 106 provided in the communication section 107 accumulates MP4 streams of respective partitions generated by the container encoder 105. It is to be noted that, in the case where division has been performed by the tile method, the storage 106 accumulates also the tile-based MP4 streams. Further, the storage 106 accumulates also an MPD file (refer to FIGS. 11 and 12) generated, for example, by the container encoder 105.

The communication section 107 receives a delivery request from the service receiver 200 and transmits MPD files to the service receiver 200 in response to the delivery request. The service receiver 200 recognizes the configuration of the delivery streams from the MPD file.

Further, the communication section 107 receives a delivery request (transmission request) for MP4 streams corresponding to a predetermined number of partitions corresponding to the display region from the service receiver 200 and transmits the MP4 streams to the service receiver 200. For example, in the delivery request from the service receiver 200, required partitions are designated by partition IDs.

### "Example of configuration of service receiver"

FIG. 35 depicts an example of a configuration of the service receiver 200. The service receiver 200 includes a control section 201, a UI section 201a, a sensor section 201b, the communication section 202, the container decoder 202, the video decoder 204, the renderer 205, and a display section 207.

The control section 201 includes a CPU (Central Processing Unit) and controls operation of each component of the service receiver 200 on the basis of a control program. The UI section 201a is for performing user interfacing and includes, for example, a pointing device for allowing the user to operate movement of the display region, a microphone for inputting sound for allowing the user to give instructions on movement of the display region by using sound, and so forth. The sensor section 201b includes various sensors for acquiring information of a user state or an environment and includes, for example, a posture detection sensor incorporated in an HMD (Head Mounted Display) and so forth.

The communication section 202 transmits a delivery request to the service transmission system 100 and receives an MPD file (refer to FIGS. 11 and 12) from the service transmission system 100 in response to the delivery request under the control of the control section 201. The communication section 202 sends the MPD file to the control section 201. Consequently, the control section 201 recognizes the configuration of the delivery stream.

Further, the communication section 202 transmits, to the service transmission system 100, a delivery request (transmission request) for MP4 streams corresponding to a predetermined number of partitions corresponding to the display region and receives MP4 streams corresponding to the predetermined number of partitions from the service transmission system 100 in response to the delivery request under the control of the control section 201.

Here, the control section 101 acquires information of a direction or a speed of movement of the display region on the basis of information of a direction and an amount of a movement obtained by the gyro sensor or the like incorporated in the HMD or on the basis of pointing information by a user operation or of sound UI information of the user, to thereby select a predetermined number of partitions corresponding to the display region. In this case, the control section 101 sets the value of the predetermined number to a decodable maximum value or a value proximate to the maximum on the basis of the decoding capacity and information of the number of pixels and the frame rate of the encoded stream of each partition recognized from the MPD file. The transmission request section 206 depicted in FIG. 4 is configured from the control section 101.

Further, the control section 101 detects a movement of the display region, decides whether or not it is predicted that the display region exceeds the current decode range, decides, in the case where the decode mode is the wide decode mode, whether or not the display region converges into a decode range corresponding to the normal decode mode, and performs a control process of decode range change and mode change (refer to FIG. 33).

The container decoder 203 extracts encoded streams of respective partitions from MP4 streams of a predetermined number of partitions corresponding to the display region received by the communication section 202 and sends the encoded streams to the video decoder 204. It is to be noted that, in the case where division has been performed by the tile method, since not only MP4 streams of a predetermined number of partitions corresponding to the display region but also a tile-based MP4 stream are received by the communication section 202, encoded streams including parameter set information and so forth included in the tile-based MP4 stream are also sent to the video decoder 204.

Further, the container decoder 203 extracts a partition descriptor (refer to FIG. 9) inserted in the initialization segment (IS) of each MP4 stream and sends the partition descriptors to the control section 201. The control section 201 acquires information of the number of pixels and the frame rate of each partition and hierarchical encoding information from the descriptors.

The video decoder 204 performs a decoding process for encoded streams of a predetermined number of partitions corresponding to the display region supplied from the container decoder 203 to obtain image data. Here, the video decoder 204 performs, under the control of the control section 201, when the decode mode is the normal decode mode, a temporal full decode process for the encoded streams of a predetermined number of partitions. However, the video decoder 204 performs, when the decode mode is the wide decode mode, a temporal partial decode process for part or all of the encoded streams of a predetermined number of partitions to make decode of the predetermined number of partitions in the wide decode mode possible (refer to FIGS. 29 and 30).

The renderer 205 performs a rendering process for image data of a predetermined number of partitions obtained by the video decoder 204 to obtain a rendering image (image data) corresponding to the display region. The display section 207 displays the rendering image (image data) obtained by the renderer 205. The display section 207 is configured, for example, from an HMD (Head Mounted Display), a display panel or the like.

As described above, in the transmission and reception system 10 depicted in FIG. 3, the service transmission system 100 transmits encoded streams corresponding to respective partitions (divided regions) of a wide viewing angle image (projection picture) together with information of the number of pixels and the frame rate of the respective partitions. Therefore, on the reception side, the number of partitions to be decoded corresponding to the display region can be set easily to a decodable maximum on the basis of the decoding capacity and the information of the number of pixels and the frame rate of each partition of the wide viewing angle image. Therefore, the frequency of switching of the encoded stream together with a movement of the display region can be reduced as far as possible, and the display performance in VR reproduction can be improved.

Further, in the transmission and reception system 10 depicted in FIG. 3, the service receiver 200 calculates the number of partitions to be decoded corresponding to the display region on the basis of the decoding capacity and information of the number of pixels and the frame rate of each partition. Therefore, the number of partitions to be decoded corresponding to the display region can be set easily to a maximum, and the frequency of switching of the encoded stream with a movement of the display region can be reduced as far as possible, and improvement of the display performance in VR reproduction can be made.

Further, in the transmission and reception system 10 depicted in FIG. 3, the service receiver 200 predicts that the display region exceeds the decode range and switches the decoding method to temporal partial decode, and predicts that the display region converges in the decode range and switches the decode method to temporal full decode. In this case, by switching the decode method to temporal partial decode, the number of decodable divided regions can be increased. Consequently, the frequency of switching of the encoded stream with respect to a movement of the display region different from the prediction can be reduced and further improvement of the display performance in VR reproduction can be made.

### <2. Modifications]

### [Adaptation to MPEG-2 TS and MMT]

It is to be noted that the embodiment described above indicates an example in which the container is MP4 (ISOBMFF). However, the present technology does not limit the container to MP4 and can be applied similarly also to containers of other formats such as MPEG-2 TS or MMT.

For example, in the case of MPEG-2 TS, the container encoder 105 of the service transmission system 100 depicted in FIG. 4 generates a transport stream (Transport Stream) including an encoded stream of each partition of a projection picture.

At this time, the container encoder 105 inserts the partition descriptor (Partition_descriptor) (refer to FIG. 9) into a video elementary stream loop corresponding to each encoded stream of a program map table (PMT: Program Map Table).

FIG. 36 depicts an example of a configuration of a transport stream in the case where video encoding is ready for a tile. In this configuration example, a PES packet "video PES0" of a tile-based encoded stream identified by PID0 exists. In the payload of this PES packet "video PES0," NAL units of "AUD," "VPS," "SPS," "PPS," "PSEI," and "SSEI" are arranged.

Further, PES packets "video PES1" to "video PES4" of encoded streams of first to fourth partitions (tiles) identified by PID1 to PID4 exist. In the payload of the PES packets, NAL units of "AUD" and "SLICE" are arranged.

Further, in PMT, video elementary stream loops (video ES loop) corresponding to the PES packets "video PES0" to "video PES4" exist. In each loop, information of a stream type, a packet identifier (PID) and so forth is placed according to the encoded stream, and also a descriptor that describes information relating to the encoded stream is placed. This stream type is "0 × 24" indicative of a video stream. Further, as one of descriptors, a partition descriptor is inserted.

It is to be noted that an example of a configuration of a transport stream in the case where video encoding encodes each partition into an independent stream is similar in configuration although it is not depicted. In this case, there is no portion corresponding to the PES packet "video PES0" of the tile-based encoded stream, and in the payload of the PES packets "video PES1" to "video PES4" of the encoded streams of the first to fourth partitions, NAL units of "AUD," "VPS," "SPS," "PPS," "PSEI," "SLICE," and "SSEI" are arranged.

Further, for example, in the case of MMT, the container encoder 104 of the service transmission system 100 depicted in FIG. 4 generates an MMT stream (MMT Stream) including a video stream.

At this time, the container encoder 104 inserts the partition descriptor (refer to FIG. 9) into a video asset loop corresponding to an extended video stream of an MMT package table (MPT: MMT Package Table).

FIG. 37 depicts an example of a configuration of an MMT stream in the case where video encoding is ready for a tile. In this configuration example, an MPU packet "video MPU0" of the tile-based encoded stream identified by ID0 exists. In the payload of this MPU packet "video MPU0," NAL units of "AUD," "VPS," "SPS," "PPS," "PSEI," "SLICE," and "SSEI" are arranged.

Further, MPU packets "video MPU1" to "video MPU4" of encoded streams of the first to fourth partitions (tiles) identified by ID1 to ID4 exist. In the payload of the MPU packets, NAL units of "AUD" and "SLICE" are arranged.

Further, in the MPT, video asset loops (video asset loop) corresponding to the MPU packets "video MPU0" to "video MPU4" exist. In each loop, information of an asset type, an asset identifier (ID) and so forth is arranged according to the encoded stream, and a descriptor that describes information relating to the encoded stream is also arranged. This asset type is "0 × 24" indicative of a video stream. Further, as one of descriptors, a partition descriptor is inserted.

It is to be noted that an example of a configuration of an MMT stream in the case where video encoding encodes each partition into an independent stream is similar in configuration although illustration of it is omitted. In this case, there is no portion corresponding to the MPU packet "video MPU0" of the tile-based encoded stream, and in the payload of the MPU packets "video MPU1" to "video MPU4" of the encoded streams of the first to fourth partitions, NAL units of "AUD," "VPS," "SPS," "PPS," "PSEI," "SLICE," and "SSEI" are arranged.

Further, although the embodiment described above indicates an example in which, in the case where video encoding is ready for a tile, a tile stream has a multi stream configuration, it is also conceivable to form the tile stream in a single stream configuration.

FIG. 38 depicts an example of a description of an MPD file in the case where a tile stream has a single stream configuration. In this MPD file, an adaptation set (AdaptationSet) corresponding to the MP4 stream (track) corresponding to the tile stream exists.

In the adaptation set, by the description of '<AdaptationSet mimeType= "video/mp4" codecs= "hev1.xx.xx.Lxxx,xx,hev1.yy.yy.Lxxx,yy">",' an adaptation set (AdaptationSet) with respect to the video stream exists, the video stream is supplied with an MP4 file structure, and presence of an HEVC-encoded video stream (encoded image data) is indicated.

By the description of '<SupplementaryDescriptor schemeIdUri= "urn:brdcst:video:format_type" value/>,' a format type of the projection picture is indicated. By the description of '<SupplementaryDescriptor schemeIdUri= "urn:brdcst:video:formatrate" value/>,' a frame rate (full frame rate) of pictures is indicated.

By the description of '<SupplementaryDescriptor schemeIdUri= "urn:brdcst:video:tilepartitionflag" value= "1"/>,' it is indicated whether or not the partition is picture-divided by the tile method. By '<SupplementaryDescriptor schemeIdUri= "urn:brdcst:video:tilebaseflag" value= "0"/>,' it is indicated that the partition is a container other than a tile-based container.

By the description of '<SupplementaryDescriptor schemeIdUri= "urn:brdcst:video:wholepicturesizehorizontal" value/>,' the number of horizontal pixels of the whole picture is indicated. By the description of '<SupplementaryDescriptor schemeIdUri= "urn:brdcst:video:wholepicturesizevertical" value/>,' the number of vertical pixels of the whole picture is indicated.

By the description of '<SupplementaryDescriptor schemeIdUri= "urn:brdcst:video:partitionid" value/>,' the partition ID is indicated. By the description of '<SupplementaryDescriptor schemeIdUri= "urn:brdcst:video:partitionstartpositionhorizontal" value/>,' the horizontal start pixel position of the partition is indicated. By the description of '<SupplementaryDescriptor schemeIdUri= "urn:brdcst:video:partitiontartpositionvertical" value/>,' the horizontal end pixel position of the partition is indicated. By the description of '<SupplementaryDescriptor schemeIdUri= "urn:brdcst:video:partitionendpositionhorizontal" value/>,' the vertical start pixel position of the partition is indicated. By the description of '<SupplementaryDescriptor schemeIdUri= "urn:brdcst:video:partitionendpositionvertical" value/>,' the vertical end pixel position of the partition is indicated.

By the description of '<SupplementaryDescriptor schemeIdUri= "urn:brdcst:video:partitionsublayerid" value/>,' a sublayer ID of the partition is indicated. By the description of '<SupplementaryDescriptor schemeIdUri= "urn:brdcst:video:partitionsublayerframerate" value/>,' a frame rate of the sublayer of the partition is indicated. The descriptions of the sublayer ID and the frame rate of the partition are repeated by a number of times equal to the number of sublayers. Further, the descriptions from the partition ID to the frame rate of the sublayer described above are repeated by a number of times equal to the number of partitions in tile encoding.

Further, in the adaptation set, a representation (Representation) corresponding to the video stream exists. In this representation, by the descriptions of 'width= "" height= "" frameRate= "",' 'codecs="hev1.xx.xx.Lxxx,xx",' and 'level= "0",' a resolution, a frame rate, and a codec type are indicated, and further, it is indicated that, as tag information, the level "0" is provided. Further, by the description of '<BaseURL>videostreamVR.mp4</BaseURL>,' it is indicated that the location destination of the MP4 stream is indicated as 'videostreamVR0.mp4.'

FIG. 39 schematically depicts an MP4 stream (track) in the case where the tile stream has a single stream configuration. In this case, one MP4 stream corresponding to the tile stream exists. The MP4 stream is configured such that each random access period begins with an initialization segment (IS: initialization segment), which is followed by boxes of "styp," "sidx (Segment index box)," "ssix (Sub-segment index box)," "moof" (Movie fragment box)," and "mdat (Media data box)."

The initialization segment (IS) has a box (Box) structure based on ISOBMFF (ISO Base Media File Format). The partition descriptor (refer to FIG. 9) is inserted in the initialization segment (IS). It is to be noted that the partition descriptor in this case includes information of all partitions (tiles) in tile encoding. In the mdat" box, NAL units of "VPS," "SPS," "PPS," "PSEI," "SLICE," and "SSEI" are placed.

FIG. 40 depicts an example of a configuration of a transport stream in the case where a tile stream has a single stream configuration. In this configuration example, a PES packet "video PES1" of the tile stream identified by PID1 exists. In the payload of this PES packet "video PES1," NAL units of "AUD," "VPS," "SPS," "PPS," "PSEI," "SLICE," and "SSEI" are arranged.

Further, in the PMT, a video elementary stream loop (video ES1 loop) corresponding to the PES packet "video PES1" exists. In this loop, information of a stream type, a packet identifier (PID) and so forth is placed according to the time stream, and a descriptor that describes information relating to the tile stream is also placed. This stream type is "0 × 24" indicative of a video stream. Further, as one of descriptors, the partition descriptor (refer to FIG. 9) is inserted. It is to be noted that the partition descriptor in this case includes information of all partitions (tiles) in tile encoding.

FIG. 41 depicts an example of a configuration of an MMT stream in the case where the tile stream has a single stream configuration. In this configuration example, an MPU packet "video MPU1" of the tile stream identified by ID1 exists. In the payload of this MPU packet "video MPU1," NAL units of "AUD," "VPS," "SPS," "PPS," "PSEI," "SLICE," and "SSEI" are arranged.

Further, in the MPT, a video asset loop (video asset1 loop) corresponding to the MPU packet "video MPU1" exists. In this loop, information of an asset type, an asset identifier (ID) and so forth is arranged according to the tile stream, and a descriptor that describes information relating to the tile stream is also arranged. This asset type is "0 × 24" indicative of a video stream. Further, as one of descriptors, the partition descriptor (refer to FIG. 9) is inserted. It is to be noted that the partition descriptor in this case includes information of all partitions (tiles) in tile encoding.

Further, the embodiment described above indicates an example in which, in the case where the container is MP4, a partition descriptor is also contained in a track that contains "SLICE" of the encoded video (refer to FIGS. 13, 14, and 39). However, as depicted in FIG. 42, 43, and 44, a configuration is also conceivable in which, while "SLICE" of the encoded video is contained in a track "track 1A, 2A, 3A, 4A," a partition descriptor is contained in "mdat" of another track "track 1B, 2B, 3B, 4B."

By adopting such a configuration as depicted in FIG. 42, 43, or 44, temporal synchronism with an associated picture is assured for each sample. In this case, a track including each partition descriptor clearly indicates, by "tref" in the initialization segment (IS) of the track itself, a reference target of a track in which the encoded video is included .

Further, while the embodiment described above indicates an example of the transmission and reception system 10 configured from the service transmission system 100 and the service receiver 200, the configuration of the transmission and reception system to which the present technology can be applied is not limited to this. For example, a case is also conceivable in which the part of the service receiver 200 is a set top box and a display connected to each other by a digital interface such as HDMI (High-Definition Multimedia Interface). It is to be noted that "HDMI" is a registered trademark.

Further, the present technology can assume such configurations as described below.
(1) A transmission apparatus including:
   a transmission section configured to transmit an encoded stream corresponding to each of divided regions of a wide viewing angle image and transmit information of the number of pixels and a frame rate of each of the divided regions.
(2) The transmission apparatus according to (1) above, in which
   the wide viewing angle image includes a projection picture obtained by cutting out and plane packing part or an entirety of a spherical captured image.
(3) The transmission apparatus according to (1) or (2) above, in which
   the encoded stream corresponding to each of the divided regions of the wide viewing angle image is obtained by individually encoding each of the divided regions of the wide viewing angle image.
(4) The transmission apparatus according to (1) or (2) above, in which
   the encoded stream corresponding to each of the divided regions of the wide viewing angle image is obtained by performing encoding using a tile function for converting each of the divided regions of the wide viewing angle image into a tile.
(5) The transmission apparatus according to any one of (1) to (4) above, in which
   the transmission section transmits the information of the number of pixels and the frame rate of the divided region together with a container that includes the encoded stream.
(6) The transmission apparatus according to any one of (1) to (5) above, in which
   the transmission section transmits encoded streams corresponding to all of the respective divided regions of the wide viewing angle image.
(7) The transmission apparatus according to any one of (1) to (5) above, in which
   the transmission section transmits an encoded stream corresponding to a requested divided region from among the respective divided regions of the wide viewing angle image.
(8) The transmission apparatus according to any one of (1) to (7) above, in which
   the encoded stream corresponding to each of the divided regions of the wide viewing angle image is hierarchically encoded.
(9) A transmission method including:
   a transmission step, by a transmission section, of transmitting an encoded stream corresponding to each of divided regions of a wide viewing angle image and transmitting information of the number of pixels and a frame rate of each of the divided regions.
(10) A reception apparatus including:
   a control section configured to control a process for decoding encoded streams of a predetermined number of divided regions corresponding to a display region from among respective divided regions of a wide viewing angle image to obtain image data of the display region, and a process for calculating a value of the predetermined number on the basis of a decoding capacity and information of the number of pixels and a frame rate associated with each of the encoded streams corresponding to the respective divided regions of the wide viewing angle image.
(11) The reception apparatus according to (10) above, in which
   the control section further controls a process for requesting a distribution server for transmission of the encoded streams of the predetermined number of divided regions and receiving the encoded streams of the predetermined number of divided regions from the distribution server.
(12) The reception apparatus according to (10) or (11) above, in which
   the control section further controls a process for predicting that the display region exceeds a decode range and switching the decode range.
(13) The reception apparatus according to (12) above, in which
   the control section further controls a process for predicting that the display region exceeds the decode range and switching a decode method to temporal partial decode to enlarge the decode range, and
   the control section further controls a process for predicting that the display region converges into the decode range before the enlargement and switching the decode method to temporal full decode to reduce the decode range.
(14) A reception method including:
   a control step, by a control section, of controlling a process for decoding encoded streams of a predetermined number of divided regions corresponding to a display region from among respective divided regions of a wide viewing angle image to obtain image data of the display region, and a process for calculating a value of the predetermined number on the basis of a decoding capacity and information of the number of pixels and a frame rate associated with each of the encoded streams corresponding to the respective divided regions of the wide viewing angle image.

The principal feature of the present technology is that, by transmitting information of the number of pixels and a frame rate of each of partitions (divided regions) of a wide viewing angle image (projection picture), on the reception side, the number of partitions to be decoded corresponding to a display region is easily set to a decodable maximum on the basis of the decoding capacity and the information of the number of pixels and the frame rate to achieve improvement of the display performance in VR reproduction (refer to FIGS. 12 and 9).

### [Reference Signs List]

- 10: Transmission and reception system
- 100: Service transmission system
- 101: Control section
- 101a: User operation section
- 102: 360° picture capture section
- 103: Plane packing section
- 104: Video encoder
- 105: Container encoder
- 106: Storage
- 107: Communication section
- 200: Service receiver
- 201: Control section
- 201a: UI section
- 201b: Sensor section
- 202: Communication section
- 203: Container decoder
- 204: Video decoder
- 205: Renderer
- 206: Transmission request section
- 207: Display section

## Claims

1. A transmission apparatus comprising:
a transmission section configured to transmit an encoded stream corresponding to each of divided regions of a wide viewing angle image and transmit information of the number of pixels and a frame rate of each of the divided regions.

2. The transmission apparatus according to claim 1, wherein
the wide viewing angle image includes a projection picture obtained by cutting out and plane packing part or an entirety of a spherical captured image.

3. The transmission apparatus according to claim 1, wherein
the encoded stream corresponding to each of the divided regions of the wide viewing angle image is obtained by individually encoding each of the divided regions of the wide viewing angle image.

4. The transmission apparatus according to claim 1, wherein
the encoded stream corresponding to each of the divided regions of the wide viewing angle image is obtained by performing encoding using a tile function for converting each of the divided regions of the wide viewing angle image into a tile.

5. The transmission apparatus according to claim 1, wherein
the transmission section transmits the information of the number of pixels and the frame rate of the divided region together with a container that includes the encoded stream.

6. The transmission apparatus according to claim 1, wherein
the transmission section transmits encoded streams corresponding to all of the respective divided regions of the wide viewing angle image.

7. The transmission apparatus according to claim 1, wherein
the transmission section transmits an encoded stream corresponding to a requested divided region from among the respective divided regions of the wide viewing angle image.

8. The transmission apparatus according to claim 1, wherein
the encoded stream corresponding to each of the divided regions of the wide viewing angle image is hierarchically encoded.

9. A transmission method comprising:
a transmission step, by a transmission section, of transmitting an encoded stream corresponding to each of divided regions of a wide viewing angle image and transmitting information of the number of pixels and a frame rate of each of the divided regions.

10. A reception apparatus comprising:
a control section configured to control a process for decoding encoded streams of a predetermined number of divided regions corresponding to a display region from among respective divided regions of a wide viewing angle image to obtain image data of the display region, and a process for calculating a value of the predetermined number on a basis of a decoding capacity and information of the number of pixels and a frame rate associated with each of the encoded streams corresponding to the respective divided regions of the wide viewing angle image.

11. The reception apparatus according to claim 10, wherein
the control section further controls a process for requesting a distribution server for transmission of the encoded streams of the predetermined number of divided regions and receiving the encoded streams of the predetermined number of divided regions from the distribution server.

12. The reception apparatus according to claim 10, wherein
the control section further controls a process for predicting that the display region exceeds a decode range and switching the decode range.

13. The reception apparatus according to claim 12, wherein
the control section further controls a process for predicting that the display region exceeds the decode range and switching a decode method to temporal partial decode to enlarge the decode range, and
the control section further controls a process for predicting that the display region converges into the decode range before the enlargement and switching the decode method to temporal full decode to reduce the decode range.

14. A reception method comprising:
a control step, by a control section, of controlling a process for decoding encoded streams of a predetermined number of divided regions corresponding to a display region from among respective divided regions of a wide viewing angle image to obtain image data of the display region, and a process for calculating a value of the predetermined number on a basis of a decoding capacity and information of the number of pixels and a frame rate associated with each of the encoded streams corresponding to the respective divided regions of the wide viewing angle image.
